# EUROPEAN PATENT SPECIFICATION

(11) **EP 2 378 154 B1**
(45) Date of publication and mention of the grant of the patent: **11.03.2020**
(21) Application number: 09833123.4
(22) Date of filing: 18.11.2009
(51) Int. Cl.: B61H 13/00, B60T 17/08, F16D 65/28

(54) **BRAKE CYLINDER DEVICE AND UNIT BRAKE**
BREMSZYLINDERVORRICHTUNG UND BREMSE
DISPOSITIF DE CYLINDRE DE FREIN ET FREIN UNITAIRE

(30) Priority: 17.12.2008 JP 2008321316; 17.08.2009 JP 2009188717
(43) Date of publication of application: 19.10.2011
(73) Proprietor: Nabtesco Corporation, Tokyo 105-0022 (JP)
(72) Inventor: ASANO, Yoshio, Kobe-shi Hyogo 651-2271 (JP)
(74) Representative: Isarpatent
(86) International application number: PCT/JP2009/006183
(87) International publication number: WO 2010/070813

(56) References cited:
- EP-A1- 0 050 573
- JP-A- 2001 206 213
- JP-A- 2001 206 213
- JP-A- 2008 101 766
- JP-A- 2008 101 766
- JP-B- 61 019 852

## Description

### Technical Field

The present invention relates to a brake cylinder device in which both a service brake means and a spring brake means used, for example, as a parking brake, are capable of being operated, and a unit brake that includes the brake cylinder device for braking the rotation of a wheel of a vehicle.

### Background Art

As a unit brake for braking a vehicle, a unit brake is used that includes a brake cylinder device and a brake body to which the brake cylinder device is attached, and the unit brake brakes the rotation of a wheel by bringing into contact with the wheel of the vehicle a brake shoe that is held so as to be movable relative to the brake body by operating the brake cylinder device. As the brake cylinder device of such a unit brake, for example in a brake system for railway vehicles, a brake cylinder device is known in which both a service brake means used in a normal operation and operated by compressed air (pressure fluid) and a spring brake means used, for example, in a prolonged parking of a vehicle and operated by a spring force even in the absence of compressed air are capable of being operated (see Patent Document 1). In the brake cylinder device disclosed in Patent Document 1, the service brake means is provided with a first piston on which a first pressure chamber and a first spring act in opposite directions, with a rod projecting from the first piston, and the spring brake means is provided with a second piston on which a second pressure chamber and a second spring act in opposite directions, with the rod penetrating the second pressure chamber. The first piston moves in a braking direction by supply of compressed air to the first pressure chamber against the elastic force of the first spring, and furthermore, the second piston moves in the braking direction by the elastic force of the second spring by discharge of compressed air from the second pressure chamber.

The above-described brake cylinder device is also provided with a clutch mechanism that switches between transmission and interruption of the elastic force of the spring brake means by connecting or disconnecting the rod and the second piston. The clutch mechanism is provided with a nut member that is supported rotatably with respect to the second piston and is screwed to the rod. Also, the clutch mechanism is configured to establish a connecting state where the rod and the second piston are connected by movement of the nut member together with the second piston with respect to the rod by the elastic force of the second spring, due to a transition from a state where compressed air is supplied to the second pressure chamber to a state where compressed air is discharged from the second pressure chamber. On the other hand, in a state where compressed air is supplied to the second pressure chamber, the clutch mechanism is configured to establish a disconnecting state where the rod and the second piston are disconnected. The brake cylinder device is intended to maintain the braking force of the spring brake means by the clutch mechanism shifting to the above-described connecting state where the indented teeth of the nut member and a sleeve member, which is a complementary member of the nut member, of the clutch mechanism are meshed with each other and thus are connected.

### Prior Art Document

### Patent Document

Patent Document 1: JP 2008-101766A

### Disclosure of Invention

### Problem to be Solved by the Invention

With the above-described clutch mechanism of the brake cylinder device disclosed in Patent Document 1, as the nut member moves together with the second piston, the tip portions of the indented teeth of the nut member and the sleeve member come into contact with each other first. At this time, the rotation of the nut member tends to be stopped by contact resistance with the sleeve member that is prevented from being displaced in the rotation direction. Accordingly, there may be cases where the rod and the second piston are connected in a state where the nut member and the sleeve member remain meshed at their tip portions without their indented teeth meshed sufficiently deep with each other. If the clutch mechanism is left in such a connecting state and the elastic force acted on the first piston by the action of the first pressure chamber is reduced as a result of a gradual release of the compressed air from the first pressure chamber of the service brake means, the forces from a brake shoe and structural members of a truck that are made of a synthetic material and that have been bent by this elastic force, as well as from spring elements provided in the truck that have been compressed or extended by this elastic force are overlapped, resulting in a reaction force from the brake shoe. Due to this reaction force from the brake shoe, the first piston is slightly pushed back in a direction that is opposite to the braking direction, and at the same time, the rod, which is formed integrally with the first piston, is also slightly pushed back in the direction opposite to the braking direction, as a result of which the meshing portions of the clutch mechanism are disengaged since they were meshed only at the tip portions, thus possibly causing an unintentional loosening of the braking force of the spring brake means used as a parking brake or the like. This tendency is more prominent especially when the elastic force acted on the first piston is high during parking since the reaction force from the brake shoe is also high.

In view of the foregoing circumstances, it is an object of the present invention to provide a brake cylinder device and a unit brake that can prevent an unintentional release of the braking force of a spring brake means due to disengagement of meshing portions of a clutch mechanism, for a brake cylinder device provided with a clutch mechanism that switches between transmission and interruption of the elastic force of a spring brake means and a unit brake including the brake cylinder device.

### Means for Solving Problem

In the following the fifth to thirteenth aspects represent aspects of comparison to the invention and are in the following abbreviated as aspects.

A first aspect of a brake cylinder device of the present invention for achieving the above-described object relates to a brake cylinder device including: a service brake means including a first piston on which a first pressure chamber and a first spring act in opposite directions, the first piston moving in a braking direction by supply of pressure fluid to the first pressure chamber against an elastic force of the first spring; and a spring brake means including a second piston on which a second pressure chamber and a second spring act in opposite directions, the second piston moving in the braking direction by an elastic force of the second spring due to a transition from a state where pressure fluid is supplied to the second pressure chamber to a state where pressure fluid is discharged from the second pressure chamber, both the service brake means and the spring brake means being capable of being operated. The brake cylinder device according to the first aspect of the present invention further includes: a spindle that is connected to the first piston so as to be rotatable about an axial direction, that penetrates the second piston, and that transmits an elastic force from the spring brake means to the first piston; a first clutch mechanism that includes a first nut member supported rotatably with respect to the second piston and screwed to the spindle, that establishes a connecting state where the spindle and the second piston are connected by movement of the first nut member together with the second piston with respect to the spindle by an elastic force of the second spring, due to a transition from a state where pressure fluid is supplied to the second pressure chamber to a state where pressure fluid is discharged from the second pressure chamber, and that establishes a disconnecting state where the spindle and the second piston are disconnected in a state where pressure fluid is supplied to the second pressure chamber; and a first spindle holding means that restricts a rotatable angle of the spindle with respect to the first piston and that holds the spindle with respect to the first piston in a state where the spindle is urged in a rotation direction that is opposite to a rotation direction of the spindle in which the first nut member is deeply screwed to the spindle.

According to this aspect of the present invention, the first clutch mechanism establishes the connecting state where the spindle that transmits the elastic force from the spring brake means to the first piston is connected to the second piston when pressure fluid is discharged from the second pressure chamber. On the other hand, in a state where pressure fluid is supplied to the second pressure chamber, the first clutch mechanism establishes the disconnecting state where the spindle and the second piston are disconnected. Therefore, the first clutch mechanism switches the operation of connecting the spring brake means and the service brake means according to the operation of the spring brake means, thus switching between transmission and interruption of the elastic force of the spring brake means. According to this aspect, the spindle is connected rotatably to the first piston, and the first spindle holding means is provided that restricts the rotatable angle of the spindle with respect to the first piston and that holds the spindle in a state where the spindle is urged in the rotation direction that is opposite to the rotation direction of the spindle in which the first nut member is deeply screwed to the spindle. Therefore, when the first nut member that has moved together with the second piston with respect to the spindle comes into contact with a complementary member in the first clutch mechanism at the tip portions while the first clutch mechanism is shifting to the connecting state, the spindle is held by the first spindle holding means so as to be rotatable within a predetermined angle range to the rotation direction in which the first nut member is deeply screwed to the spindle. Then, when the elastic force of the second spring further acts on the second piston in a state where the tip portion of the first nut member is in contact with the complementary member, this elastic force acting via the first nut member causes the spindle to rotate within the predetermined angle range in the rotation direction in which the first nut member is more deeply screwed toward the complementary member. Thereby, the first nut member moves with respect to the spindle such that the indented teeth of the first nut member and the complementary member are more deeply meshed with each other, thus connecting the spindle and the second piston reliably. As a result, a state where the braking force of the spring braking means is sufficiently conducted is maintained. This can prevent disengagement of the meshing portions of the first clutch mechanism even if the first piston is pressed by the reaction force from the brake shoe or the like in the direction opposite to the braking direction as a result of a reduced elastic force acted on the first piston by the action of the first pressure chamber due to a gradual release of the pressure fluid from the first pressure chamber of the service brake means. Accordingly, it is possible to prevent an unintentional release of the braking force of the spring brake means used as a parking brake or the like.

Therefore, according to this aspect of the present invention, it is possible to provide a brake cylinder device that can prevent an unintentional release of the braking force of the spring brake means due to disengagement of the meshing portions of the first clutch mechanism, for the brake cylinder device provided with the first clutch mechanism that switches between transmission and interruption of the elastic force of the spring brake means.

According to a brake cylinder device of a second aspect of the present invention, in the brake cylinder device according to the first aspect, the first spindle holding means includes: a holding case that is fixed to the first piston and that holds an end of the spindle such that the end is accommodated therein; a restricting portion that is provided in the spindle and that restricts a rotatable angle of the spindle by engaging the holding case; and a rotation-urging spring that urges the end of the spindle in the opposite rotation direction with respect to the holding case inside the holding case.

According to this aspect of the invention, the first spindle holding means can be realized with a simple configuration in which the holding case is attached to the first piston, the spindle is provided with the restricting portion, and the rotation-urging spring is disposed inside the holding case. Accordingly, it is possible to easily realize a first spindle holding means that restricts the rotatable angle of the spindle with respect to the first piston and that holds the spindle with respect to the first piston in a state where the spindle is urged in a predetermined rotation direction, while realizing a configuration that is not susceptible to malfunction, thus also achieving an increased reliability.

According to a brake cylinder device of a third aspect of the present invention, in the brake cylinder device of the second aspect, the restricting portion is provided as a pin member that is attached to the spindle so as to penetrate the end of the spindle and ends of the restricting portion projecting from the spindle come into abutting engagement with an inner wall of the holding case, and a plurality of the rotation-urging springs are provided, and the rotation-urging springs urge the end of the spindle in the opposite rotation direction with respect to the holding case via the pin member.

According to this aspect of the invention, a restricting portion can be formed in a simple manner as the pin member coming into contact with the inner wall of the holding case. Furthermore, it is possible to easily realize a configuration that urges the spindle in a predetermined rotation direction by urging the pin member by a plurality of rotation-urging springs. Accordingly, it is possible to realize a configuration that is not susceptible to malfunction, thus also achieving an increased reliability.

According to a brake cylinder device of a fourth aspect of the present invention, in the brake cylinder device any of the first to third aspects of the present invention, a ball member that is disposed so as to be accommodated in a recess formed in at least one of the spindle and the first piston is provided between the end of the spindle and the first piston.

According to this aspect of the invention, the spindle is held by the first spindle holding means with respect to the first piston via the ball member disposed between an end of the spindle and the first piston while being accommodated in the recess. Accordingly, the rotation operation of the spindle can be performed smoothly via the rollable ball member, and the inclination of the first piston with respect to the spindle can be absorbed.

A fifth aspect relates to a brake cylinder device including: a service brake means including a first piston on which a first pressure chamber and a first spring act in opposite directions, the first piston moving in a braking direction by supply of pressure fluid to the first pressure chamber against an elastic force of the first spring; and a spring brake means including a second piston on which a second pressure chamber and a second spring act in opposite directions, the second piston moving in the braking direction by an elastic force of the second spring due to a transition from a state where pressure fluid is supplied to the second pressure chamber to a state where pressure fluid is discharged from the second pressure chamber, both the service brake means and the spring brake means being capable of being operated. The brake cylinder device according to the fifth aspect of the present invention further includes: a spindle that is connected to the first piston so as to be rotatable about an axial direction, that penetrates the second piston, and that transmits an elastic force from the spring brake means to the first piston; and a second clutch mechanism including a second nut member that is screwed to and supported rotatably on the spindle and that is supported so as to be movable in an anti-braking direction that is an opposite direction to the braking direction, and a sleeve member that is disposed in the anti-braking direction with respect to the second nut member and opposes the second nut member around the spindle, wherein the second clutch mechanism establishes a connecting state where the spindle and the second piston are connected by meshing of the sleeve member with the second nut member by movement of the sleeve member together with the second piston with respect to the spindle by an elastic force of the second spring, due to a transition from a state where pressure fluid is supplied to the second pressure chamber to a state where pressure fluid is discharged from the second pressure chamber, and establishes a disconnecting state where the sleeve member is separated from the second nut member and thus the spindle and the second piston are disconnected in a state where pressure fluid is supplied to the second pressure chamber.

According to this aspect, the second clutch mechanism establishes the connecting state where the sleeve member and the second nut member are meshed with each other and thus the spindle that transmits the elastic force from the spring brake means to the first piston is connected to the second piston when pressure fluid is discharged from the second pressure chamber. On the other hand, in a state where pressure fluid is supplied to the second pressure chamber, the second clutch mechanism establishes the disconnecting state where the sleeve member and the second nut member are separated from each other and thus the spindle and the second piston are disconnected. Therefore, the second clutch mechanism switches the operation of connecting the spring brake means and the service brake means according to the operation of the spring brake means, thus switching between transmission and interruption of the elastic force of the spring brake means. Furthermore, according to this aspect of the invention, the sleeve member that opposes the second nut member around the spindle is disposed in the anti-braking direction with respect to the second nut member, and the sleeve member moves together with the second piston and thus is meshed with the second nut member when the second clutch mechanism shifts to the connecting state. The second nut member that is screwed to and supported rotatably on the spindle is supported so as to be movable in the anti-braking direction. Therefore, when the first piston is pressed in the anti-braking direction by the reaction force of the spring back from the brake shoe as a result of a reduced elastic force acted on the first piston by the action of the first pressure chamber due to a gradual release of the pressure fluid from the first pressure chamber of the service brake means, the second nut member is pressed in the direction in which it is deeply meshed with the sleeve member. Consequently, it is possible to prevent disengagement of the meshing portions between the second nut member and the sleeve member in the second clutch mechanism even if the reaction force of the spring back from the brake shoe is acted as a result of a release of the pressure fluid from the first pressure chamber. Accordingly, it is possible to prevent an unintentional release of the braking force of the spring brake means used as a parking brake or the like.

Therefore, according to this aspect, it is possible to provide a brake cylinder device that can prevent an unintentional release of the braking force of the spring brake means due to disengagement of the meshing portions of the second clutch mechanism, for the brake cylinder device provided with the second clutch mechanism that switches between transmission and interruption of the elastic force of the spring brake means.

According to a brake cylinder device of a sixth aspect, in the brake cylinder device of the fifth aspect, the brake cylinder device further includes a clutch box that is formed in a tubular shape, that supports the sleeve member so as to be slidable therewithin along a direction of movement of the second piston, and that supports the second nut member so as to be rotatable therewithin, and the clutch box is held, with respect to a cylinder body inside of which the second pressure chamber is partitioned, so as to be slidable together with the second nut member in the anti-braking direction in a state where the spring brake means is operated.

According to this aspect, the brake cylinder device is provided with the tubular clutch box that supports the sleeve member so as to be slidable within the clutch box and supports the second nut member so as to be rotatable within the clutch box. Also, the clutch box is held, with respect to the cylinder body, so as to be slidable together with the second nut member in the anti-braking direction in a state where the spring brake means is operated. Accordingly, even if a large amount of spring back is produced in which the first piston is pressed in the anti-braking direction by the reaction force of the spring back from the brake shoe, the second nut member can move in the anti-braking direction together with the clutch box and thus is pressed in the direction in which it is deeply meshed with the sleeve member. This makes is possible to maintain the meshed state between the second nut member and the sleeve member even if a large amount of spring back is produced from the brake shoe.

According to a brake cylinder device of a seventh aspect, in the brake cylinder device of a sixth aspect, an inner flange portion projecting inward in a flange shape and disposed in the braking direction with respect to the sleeve member is provided on an inner wall of the clutch box, and the second nut member is supported rotatably with respect to the inner flange portion.

According to this aspect, the inner flange portion disposed in the braking direction with respect to the sleeve member is provided on the inner wall of the clutch box, and the second nut member is supported rotatably with respect to the inner flange portion. Accordingly, a mechanism for rotatably supporting the second nut member disposed so as to counteract to be meshed with the sleeve member moving in the braking direction can be realized by a simple configuration by providing the clutch box with the inner flange portion.

According to a brake cylinder device of an eighth aspect, in the brake cylinder device of the seventh aspect, the brake cylinder device further includes a separating spring that is disposed between the sleeve member and the inner flange portion and that urges one of the sleeve member and the inner flange portion in a direction away from the other of the sleeve member and the inner flange portion.

According to this aspect of the invention, between the inner flange portion supporting the second nut member and the sleeve member, the separating spring is provided that urges one of the inner flange portion and the sleeve member in a direction away from the other of the inner flange portion and the sleeve member. Accordingly, a mechanism for separating the sleeve member and the second nut member in the disconnecting state of the second clutch mechanism can be realized by a simple configuration by disposing the spring between the inner flange portion and the sleeve member.

According to a brake cylinder device of a ninth aspect, in the brake cylinder device of any of the sixth to eighth aspects, an end of the clutch box in the anti-braking direction is provided as a clutch box movement restricting portion that is fixed to the second piston and comes into contact with a cover portion covering an end of the spindle in the anti-braking direction, thereby restricting an allowable relative movement of the clutch box in the anti-braking direction with respect to the second piston, and the allowable movement is set to be shorter than an allowable relative displacement by which the sleeve member can be relatively displaced with respect to the clutch box.

According to this aspect, the end of the clutch box in the anti-braking direction is provided as a clutch box movement restricting portion that restricts the allowable movement of the clutch box with respect to the second piston by coming into contact with the cover portion. Further, the allowable movement is set to be shorter than the allowable relative displacement of the sleeve member with respect to the clutch box. Accordingly, when the reaction force resulting from the spring back from the brake shoe acts in the connecting state of the second clutch mechanism, the movement of the clutch box of the second piston is restricted through contact with the cover portion, as a result of which the displacement of the sleeve member with respect to the clutch box is also restricted. This makes it possible to prevent the sleeve member from being meshed deeply with the second nut member more than necessary, thus preventing damage in the meshing portions.

According to a brake cylinder device of a tenth aspect, the brake cylinder device of any of the sixth to ninth aspects further includes a first engaging portion that is provided in the cylinder body in an inner wall portion of a sliding holding portion slidably holding the clutch box and that is formed so as to oppose the second piston and to be recessed in a step shape; a second engaging portion that is provided in an outer wall portion of the clutch box and that is formed so as to oppose the second piston and to be recessed in a step shape; an engaging member disposed so as to be engageable with the first engaging portion and the second engaging portion; an engaging spring that is disposed between the engaging member and a cover portion fixed to the second piston and covering an end of the spindle in the anti-braking direction, and that urges the engaging member in a direction in which the engaging member is engaged with the first engaging portion and the second engaging portion; and a clutch box spring that urges the clutch box with respect to the cylinder body in a direction opposite to the engaging spring, wherein the engaging spring is set so as to have a spring force greater than that of the clutch box spring.

According to this aspect, the first and second engaging portions recessed in a step shape are provided in the cylinder body in the inner wall portion of the sliding holding portion and the outer wall portion of the clutch box, respectively, and the engaging member disposed so as to be engageable with these engaging portions is urged by the engaging spring in the engaging direction with respect to the cover portion. Also, the clutch box spring that is set so as to have a spring force smaller than that of the engaging spring urges the clutch box in the opposite direction to the engaging spring with respect to the cylinder body. Accordingly, a mechanism for holding the clutch box in a movable state with respect to the cylinder body and the second piston can be realized by a simple configuration by providing the first and second engaging portions, the engaging member, the engaging spring, and the clutch box spring. Therefore, a mechanism for maintaining the meshed state between the second nut member and the sleeve member by moving the second nut member together with the clutch box as a whole even if a large amount of spring back from the brake shoe is produced can be realized by a simple configuration. Note that since the engaging spring is set to have a spring force greater than that of the clutch box spring, the second nut member and the sleeve member are kept separated when the second clutch mechanism is in the disconnecting state.

According to a brake cylinder device of an eleventh aspect, the brake cylinder device of any of the sixth to tenth aspects further includes a locking lever that can release a spring braking force of the spring brake means by an operation of pulling one end thereof that is disposed projecting from the cylinder body, wherein the sleeve member is supported with respect to the clutch box so as to be slidable parallel to an axial direction of the spindle in a state where a rotational displacement of the spindle about the axial direction is restricted, the clutch box is held with respect to the cylinder body so as to be rotatable about the axial direction of the spindle, and an extension extended so as to project further in the braking direction than the second nut member is provided at an end of the clutch box in the braking direction, and a rotational displacement of the clutch box with respect to the cylinder body is restricted by engagement of another end of the locking lever with the clutch box at the extension, and the locking lever and the extension are disengaged by an operation of pulling the one end of the locking lever.

According to this aspect, the clutch box that supports the sleeve member so as to be slidable only in the axial direction of the spindle is held with respect to the cylinder body, and the extension extended so as to project further in the braking direction than the second nut member is provided at the end of the clutch box in the braking direction. Then, the rotation of the clutch box with respect to the cylinder body is restricted since the other end of the locking lever is engaged with the extension. Accordingly, in the connecting state of the second clutch mechanism, the rotations of the sleeve member meshed with the second nut member and the clutch box are restricted, thus maintaining the spring braking force of the spring brake means. On the other hand, when it is necessary to manually release the spring braking force of the spring brake means, an operation of pulling one end of the locking lever is performed. Consequently, the locking lever and the extension are disengaged, thus releasing the spring braking force of the spring brake means. In general, in a brake cylinder device of a vehicle unit brake, a lever for releasing the spring braking force of the spring brake means is provided at a position projecting from the side of the cylinder body of the brake cylinder device. In contrast, according to this aspect of the present invention, the locking lever is provided at a position where it is engaged with the extension of the clutch box that projects further in the braking direction than the second nut member screwed to the spindle. Therefore, as with the brake cylinder device of a commonly used unit brake, the locking lever can be provided as a position projecting from the side of the cylinder body of the brake cylinder device. Accordingly, even when a unit brake including the brake cylinder device is installed on an existing vehicle, it is possible to maintain the same operability for the operation for releasing the spring braking force.

According to a brake cylinder device of a twelfth aspect, in the brake cylinder device of any of the sixth to eleventh aspects, inside the cylinder body, a space area is formed in a location further advanced in the braking direction than the end of the clutch box in the braking direction, and the clutch box is held slidably with respect to the cylinder body so as to be able to project and move in the space area in the braking direction.

According to this aspect, the space area in which the end of the clutch box in the braking direction can further project and move in the braking direction is formed inside the cylinder body. Accordingly, it is possible to prevent the amount of the moving stroke of the second piston in the braking direction from being restricted by contact of the clutch box with the cylinder body. This makes it possible to reliably transmit the spring braking force of the spring brake means regardless of the amount of the moving stroke of the second piston.

According to a brake cylinder device of a thirteenth aspect, the brake cylinder device of any of the fifth to twelfth aspects further includes a second spindle holding means that restricts a rotatable angle of the spindle with respect to the first piston, and that holds the spindle with respect to the first piston in a state where the spindle is urged in a rotation direction that is opposite to a rotation direction of the spindle in which the second nut member is deeply screwed to the spindle.

According to this aspect, the spindle is connected rotatably to the first piston, and the first spindle holding means is provided that restricts the rotatable angle of the spindle with respect to the first piston and that holds the spindle in a state where the spindle is urged in the rotation direction that is opposite to the rotation direction of the spindle in which the second nut member is deeply screwed to the spindle. Therefore, when the sleeve member that has moved together with the second piston with respect to the spindle comes into contact with the second nut member at the tip portions while the second clutch mechanism is shifting to the connecting state, the spindle is held by the first spindle holding means so as to be rotatable within a predetermined angle range in the rotation direction in which the second nut member is deeply screwed to the spindle. Then, when the elastic force of the second spring further acts on the second piston in a state where the tip portion of the sleeve member is in contact with the second nut member, this elastic force acting via the sleeve member and the second nut member causes the spindle to further rotate within the predetermined angle range in the rotation direction in which the second nut member is more deeply screwed to the spindle. Thereby, the second nut member slightly rotates and the sleeve member moves together with the second piston with respect to the spindle such that the teeth of the sleeve member and the second nut member are more deeply meshed with each other, thus reliably connecting the spindle and the second piston. As a result, a state where the braking force of the spring brake means is sufficiently transmitted is maintained. Then, it is possible to further prevent disengagement of the meshing portions of the second clutch mechanism even if the first piston is pressed by the reaction force from the brake shoe or the like in the direction opposite to the braking direction as a result of a reduced elastic force acted on the first piston by the action of the first pressure chamber due to a gradual release of the pressure fluid from the first pressure chamber of the service brake means.

According to another aspect of the present invention, it is possible configure a unit brake according to the invention including any of the above-described brake cylinder devices. That is, according to a fourteenth aspect of the present invention, there is provided a unit brake including: the brake cylinder device according to any one of the first to thirteenth aspects; and a brake body to which the brake cylinder device is attached, wherein the unit brake operates at least one of the service brake means and the spring brake means to bring into contact with a wheel of a vehicle a brake shoe that is held movable relative to the brake body, thereby braking rotation of the wheel.

According to this aspect of the invention, it is possible to prevent an unintentional release of a braking force of a spring brake means due to disengagement of the meshing portions of a clutch mechanism, for a unit brake provided a brake cylinder device including a service brake means, a spring brake means, and a clutch mechanism.

### Effects of the Invention

According to the present invention, it is possible to provide a brake cylinder device and a unit brake that can prevent an unintentional release of a braking force of a spring brake means due to disengagement of meshing portions of a clutch mechanism.

### Brief Description of Drawings

[FIG. 1] FIG. 1 is a partial cross-sectional view of a unit brake according to a first embodiment of the present invention.
[FIG. 2] FIG. 2 is a partial cross-sectional view taken at the position of the arrows K-K in FIG. 1.
[FIG. 3] FIG. 3 is a cross-sectional view of a portion of a brake cylinder device of the unit brake shown in FIG. 2.
[FIG. 4] FIG. 4 is a partial enlarged cross-sectional view showing, in enlargement, a portion in the vicinity of one end of a spindle in the brake cylinder device shown in FIG. 3.
[FIG. 5] FIG. 5 is a cross-sectional view taken at the position of the arrows C-C in FIG. 4.
[FIG. 6] FIG. 6 is a cross-sectional view illustrating the operation of the brake cylinder device shown in FIG 3.
[FIG 7] FIG. 7 is a cross-sectional view illustrating the operation of the brake cylinder device shown in FIG 3.
[FIG. 8] FIG. 8 is a cross-sectional view illustrating the operation of the brake cylinder device shown in FIG. 3.
[FIG. 9] FIGS. 9 are cross-sectional views taken at the position of the arrows C-C in FIGS. 7 and 8.
[FIG. 10] FIG. 10 is a partial cross-sectional view taken at the position of the arrows M-M in FIG. 2.
[FIG. 11] FIG. 11 is a partial cross-sectional view taken at the position of the arrows L-L in FIG. 1.
[FIG 12] FIG. 12 is a partial cross-sectional view of a unit brake according to a second embodiment which is an example of comparison.
[FIG 13] FIG. 13 is a cross-sectional view of a portion of a brake cylinder device of the unit brake shown in FIG. 12.
[FIG. 14] FIG. 14 is an enlarged cross-sectional view, showing in enlargement, a cross section of a portion of a clutch box of the brake cylinder device shown in FIG. 13 and a portion in the vicinity thereof.
[FIG. 15] FIG. 15 is a cross-sectional view illustrating the operation of the brake cylinder device shown in FIG. 13.
[FIG. 16] FIG. 16 is a cross-sectional view illustrating the operation of the brake cylinder device shown in FIG. 13.
[FIG. 17] FIG. 17 is a cross-sectional view illustrating the operation of the brake cylinder device shown in FIG. 13.
[FIG. 18] FIG. 18 is a cross-sectional view illustrating the operation of the brake cylinder device shown in FIG. 13.
[FIG. 19] FIG. 19 is an enlarged cross-sectional view, showing in enlargement, a cross section of a portion of a clutch box of the brake cylinder device shown in FIG. 18 and a portion in the vicinity thereof.
[FIG. 20] FIG. 20 is a cross-sectional view illustrating the operation of the brake cylinder device shown in FIG. 13.
[FIG. 21] FIG. 21 is a partial enlarged cross-sectional view of a brake cylinder device, showing a modification in which the attachment position of a locking lever is modified.

### Description of the Invention

Hereinafter, embodiments of the present invention will be described with reference to the drawings.

### (First Embodiment)

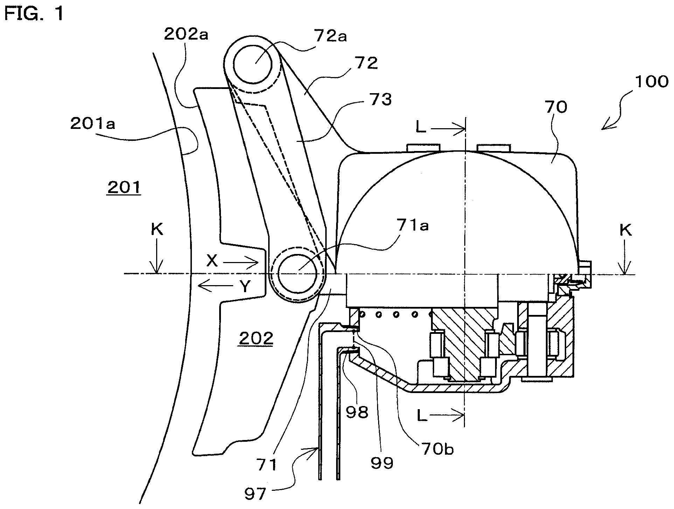

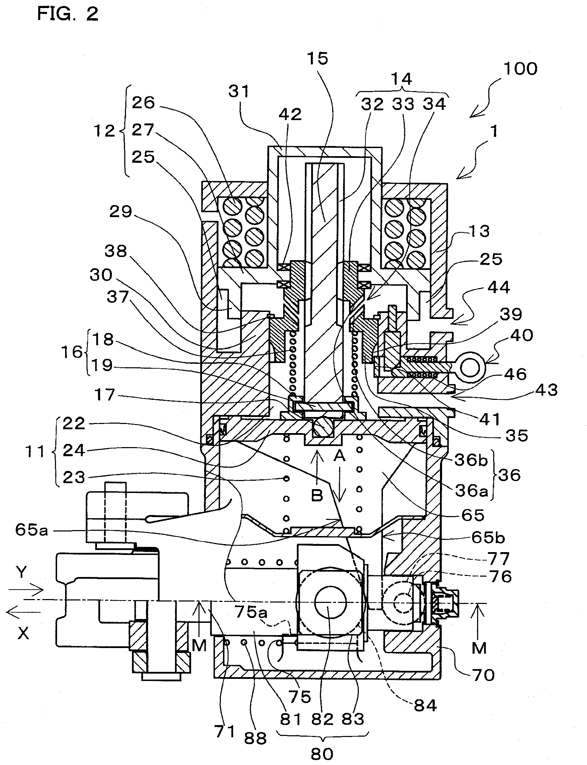

A brake cylinder device and a unit brake according to a first embodiment of the present invention will now be described. FIG. 1 is a partial cross-sectional view of a unit brake 100 according to the first embodiment when the unit brake 100 is attached to a wheel 201, as viewed from the shaft direction of the wheel. FIG. 2 is a partial cross-sectional view taken at the position of the arrows K-K in FIG. 1.

The unit brake 100 shown in FIGS. 1 and 2 includes a brake cylinder device 1 according to the first embodiment and a brake body 70 to which the brake cylinder device 1 is attached and that is formed in the shape of a box so as to cover a portion of a drive mechanism of the brake. The unit brake 100 is configured to brake the rotation of the wheel 201 by friction by operating at least one of a service brake means 11 and a spring brake means 12, which will be described below, thereby bringing, into contact with a tread 201a of the wheel 201 of a vehicle, a braking surface 202a of a brake shoe 202 that is held so as be movable relative to the brake body 70.

The unit brake 100 also includes a push rod 71 projecting from the inside of the brake body 70 toward the wheel. A supporting arm 72 extending above toward the wheel is fixed to the brake body 70, and a hanger 73 is swingably supported at an end of the supporting arm 72 via a pin 72a. The brake shoe 202 is supported rotatably via a pin 71a with respect to a lower end of the hanger 73 and the tip of the push rod 71.

Further, as shown in the partial cross-sectional view in FIG. 2, which is a cross section parallel to the axle shaft, the brake cylinder device 1 is disposed in the unit brake 100 such that the direction of movement (a braking direction A as indicated by the arrow A and an anti-braking direction B indicated by the arrow B, which is opposite to the braking direction A, in FIG.2) of a first piston 24, which will be described below, is parallel to the axle shaft. Note that wedges 65 projecting so as to taper in the braking direction A are fixed to the first piston 24. Apair of the wedges 65 are formed approximately symmetrically with respect to the push rod 71.

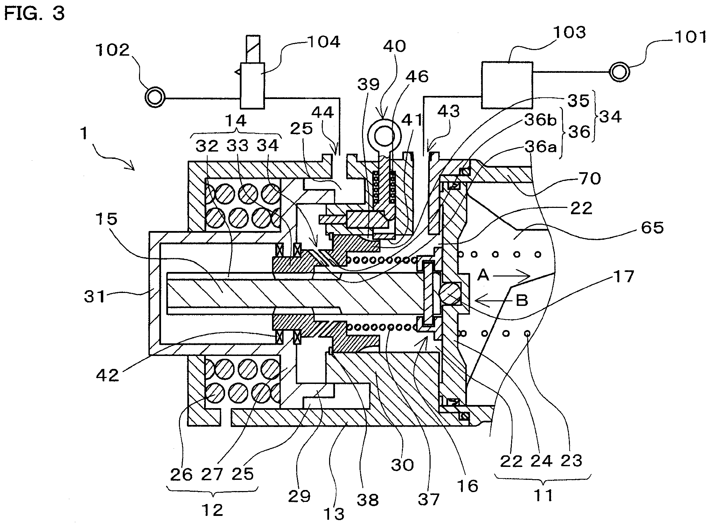

Here, the brake cylinder device 1 will be described in detail. FIG. 3 is a cross-sectional view of a portion of the brake cylinder device 1 of the unit brake 100 shown in FIG. 2. Note that in FIG. 3, the orientation of the brake cylinder device 1 is changed from the state shown in FIG. 2. The brake cylinder device 1 shown in FIGS. 2 and 3 includes the service brake means 11 operated by pressure fluid such as compressed air and the spring brake means 12 operated by the elastic force of a spring, and is configured as a brake cylinder device in which both the service brake means 11 and the spring brake means 12 are capable of being operated. The brake cylinder device 1 can be used as a brake cylinder device for railway vehicles when provided in the unit brake 100. However, the brake cylinder device 1 is not limited to this example and can be widely applied to various uses.

As shown in FIGS. 2 and 3, the brake cylinder device 1 includes a cylinder body 13, a service brake means 11, a spring brake means 12, a clutch mechanism (a first clutch mechanism in this embodiment) 14, a spindle 15, a spindle holding means (a first spindle holding means in this embodiment) 16, and so forth. Note that the service brake means 11, the spring brake means 12, the clutch mechanism 14, the spindle 15, and the spindle holding means 16 are disposed such that they are enclosed in the cylinder body 13.

The cylinder body 13 is formed in the shape of a cylinder, and is provided with a first port 43 for connection to a first air supply source 101 and a second port 44 for connection to a second air supply source 102. Compressed air (pressure fluid) supplied from the first air supply source 101 is supplied to the first port 43 via a service brake control device 103 operated in accordance with a command from a controller (not shown). The compressed air supplied into the cylinder body 13 from the first port 43 is discharged via the service brake control device 103 in accordance with a command from the controller. Further, the compressed air (pressure fluid) supplied from the second air supply source 102 is supplied to the second port 44 via a spring brake control solenoid valve 104 operated by being switched between a magnetized state and a demagnetized state in accordance with a command from the controller. The compressed air supplied into the cylinder body 13 from the second port 44 is discharged via the spring brake control solenoid valve 104 in accordance with a command from the controller.

The service brake means 11 includes a first pressure chamber 22, a first spring 23, and a first piston 24. The first pressure chamber 22 is in communication with the first port 43, and is formed by being partitioned by the first piston 24 and the brake body 70 inside the cylinder body 13. The first spring 23 is positioned in an area partitioned by the first piston 24 inside the cylinder body 13, and is disposed so as to oppose the first pressure chamber 22 via the first piston 24. The first piston 24 to which the wedges 65 are fixed is positioned reciprocally inside the cylinder body 13 and the brake body 70 (slidable on the inner wall of the cylinder body 13 or the brake body 70), and is configured to move by supply of compressed air to the first pressure chamber 22 from the first port 43 against the elastic force resulting from the elastic recovery of the compressed first spring 23. Accordingly, the service brake means 11 includes the first piston 24 on which the first pressure chamber 22 and the first spring 23 act in opposite directions, and is configured such that the first piston 24 moves in the braking direction (the direction indicated by the arrow A in the drawing) by supply of compressed air to the first pressure chamber 22 against the elastic force of the first spring 23.

The spring brake means 12 includes a second pressure chamber 25, a second spring 26, and a second piston 27. The second pressure chamber 25 is in communication with the second port 44, and is formed by being partitioned by the second piston 27 inside the cylinder body 13. The second spring 26 is positioned in an area partitioned by the second piston 27 on the other end inside the cylinder body 13, and is disposed so as to oppose the second pressure chamber 25 via the second piston 27. The second piston 27 is positioned reciprocally inside the cylinder body 13 (slidable on the inner wall of the cylinder body 13), and is provided so as to be movable in the same direction as the first piston 24. The second piston 27 is configured to move in the anti-braking direction (the direction indicated by the arrow B in the drawing), which is the direction opposite to the above-described braking direction, by supply of compressed air to the second pressure chamber 25 from the second port 44 against the elastic force resulting from the elastic recovery of the compressed second spring 26. On the other hand, the second piston 27 is configured to move in the braking direction by the elastic force of the second spring 26 by discharge of the compressed air supplied inside the second pressure chamber 25 through the second port 44. Accordingly, the spring brake means 12 includes the second piston 27 on which the second pressure chamber 25 and the second spring 26 act in opposite directions, and is configured such that the second piston 27 moves in the braking direction by the elastic force of the second spring 26 due to a transition from a state where compressed air is supplied to the second pressure chamber 25 to a state where compressed air is discharged from the second pressure chamber 25. Note that the second piston 27 is provided with a cylindrical wall 29 that is formed in the shape of a cylinder disposed along the circumferential direction and projecting in the braking direction. The cylindrical wall 29 is disposed slidingly in contact with an inner tubular portion 30 formed in a the shape of a tube along the circumferential direction inside the cylinder body 13, and the cylindrical wall 29 partitions a portion of the second pressure chamber 25.

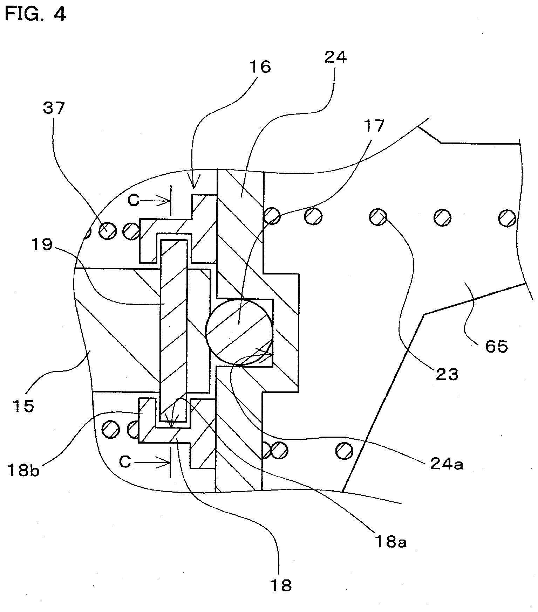

The spindle 15 is disposed so as to project toward the opposite side (the anti-braking direction) to the side to which the wedges 65 project from the first piston 24. The spindle 15 is formed separately from the first piston 24, and is provided as a shaft-like member that transmits the elastic force from the spring brake means 12 to the first piston 24. Further, the spindle 15 is connected to the first piston 24 so as to be rotatable about its axial direction via the spindle holding means 16, which will be described below. The spindle 15 is disposed so as to penetrate the second piston 27 on the other end, which is opposite to the end where the spindle 15 is connected rotatably to the first piston 24. FIG. 4 is a partial enlarged cross-sectional view showing, in enlargement, a portion in the vicinity of one end of the spindle 15 shown in FIG. 3. As shown in FIGS. 3 and 4, between one end of the spindle 15 and the first piston 24, a ball member 17 is provided that is disposed so as to come into rollable contact with both the spindle 15 and the first piston 24. The ball member 17 is disposed so as to be accommodated in a recess 24a formed in the first piston 24 such that the rolling position can be stably positioned. Note that the recess in which the ball member 17 is accommodated may not be formed in the first piston 24, and may be formed in at least one of the spindle 15 and the first piston 24.

The clutch mechanism 14 shown in FIGS. 2 and FIG. 3 includes a screw 32, a nut member (a first nut member in this embodiment) 33, and an anti-rotation means 34. The screw 32 is formed on the outer circumference of an end of the spindle 15. The nut member 33 is disposed in a state where it is screwed to and meshed with the screw 32, and is supported rotatably with respect to the second piston 27 via a bearing 42. Thereby, the nut member 33 is configured to be screwed to the screw 32 and rotated by the relative movement between the spindle 15 and the second piston 27. Then, the clutch mechanism 14 is configured to establish a connecting state where the spindle 15 and the second piston 27 are connected by movement of the nut member 33 by the elastic force of the second spring 26 with respect to the spindle 15 together with the second piston 27 by the operation of an anti-rotation means 34, which will be described below, due to a transition from a state where compressed air is supplied to the second pressure chamber 25 to a state where compressed air is discharged from the second pressure chamber 25. On the other hand, in a state where compressed air is supplied to the second pressure chamber 25, the clutch mechanism 14 is configured to establish a disconnecting state where the spindle 15 and the second piston 27 are disconnected.

The anti-rotation means 34 shown in FIGS. 2 and 3 is provided as a means for preventing the rotation of the nut member 33 by coming into contact with the nut member 33 when the second piston 27 moves with respect to the spindle 15. The anti-rotation means 34 is made up of a sleeve member 35 opposing the nut member 33 and a meshing means 36 provided in portions where the nut member 33 and the sleeve member 35 oppose each other. The sleeve member 35 is inserted axially along the inner tubular portion 30 so as to be slidable. The sleeve member 35 is urged by a spring 37 toward a stopper ring 38 disposed on the opposite side to the spring 37. The sleeve member 35 is configured to be prevented from rotating in one direction by a locking lever 40. Specifically, a latch blade 39 extending axially is provided on the outer circumference of the sleeve member 35, and a blade edge 41 that is urged by a spring 46 toward the latch blade 39 is provided at the tip of the locking lever 40. The latch blade 39 and the blade edge 41 serve as a one-way clutch that prevent the rotation together with the rotation in association with the movement of the nut member 33 to one side (in the braking direction) but allow the rotation together with the rotation in association with the movement of the nut member 33 to the other side (in the anti-braking direction). Note that the blade edge 41 of the locking lever 40 is configured to be urged toward the latch blade 39 by the spring 46 and disengaged from the latch blade 39 against the elastic force of the spring 46 when an eyenut is pulled up. The latch blade 39 of the sleeve member 35 extends axially and the blade edge 41 of the locking lever 40 is engaged with the end of the latch blade 39 on one side, and therefore the latch blade 39 and the blade edge 41 can be kept engaged even if the sleeve member 35 slides toward that side.

The meshing means 36 of the anti-rotation means 34 is made up of an indented tooth 36a formed at the end of the nut member 33 on the side opposing the sleeve member 35 and an indented tooth 36b formed at the end of the sleeve member 35 on the side opposing the nut member 33. Upon movement of the second piston 27 with respect to the spindle 15, the indented tooth 36a of the nut member 33 and the indented tooth 36b of the sleeve member 35 are meshed with each other and thus prevent the rotation of the nut member 33, thereby establishing a connecting state where the spindle 15 and the second piston 27 are connected. On the other hand, in a state where compressed air is supplied to the second pressure chamber 25, the indented tooth 36a of the nut member 33 and the indented tooth 36b of the sleeve member 35 are not meshed with each other and therefore the nut member 33 is in a rotatable state, establishing a disconnecting state where the spindle 15 and the second piston 27 are disconnected.

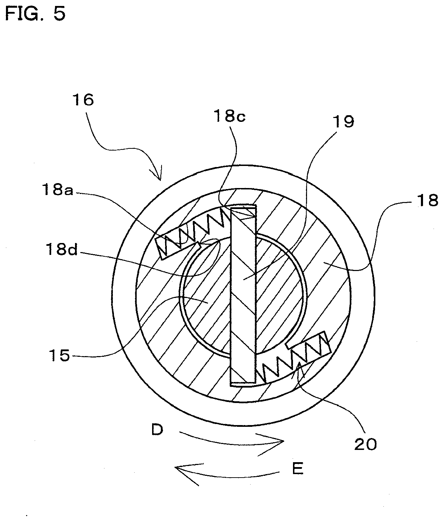

FIG. 5 is a cross-sectional view of the spindle holding means 16 and the spindle 15 taken at the position of the arrows C-C in FIG. 4. As shown in FIGS. 2 to 5, the spindle holding means 16 includes a holding case 18, a pin member 19, and rotation-urging springs 20.

The holding case 18 is formed in the shape of a short cylinder open at both ends, and is fixed to the central portion of the first piston 24. The spindle 15 is held by the holding case 18 such that one end of the spindle is accommodated in the holding case 18. Further, as shown in FIG. 5, a plurality of (in this embodiment, two) grooves 18a in which the rotation-urging springs 20, which will be described below, are respectively disposed are formed in the inner wall of the holding case 18. The grooves 18a are formed so as to extend in the direction of the tangent of a predetermined circle (imaginary circle) that is concentric to the rotation axis of the spindle 15.

The pin member 19 is formed as a columnar member, and is attached to the spindle 15 so as to penetrate one end of the spindle 15. The pin member 19 is disposed such that its both ends project from the spindle 15, and is provided so as to come into abutting engagement with the inner wall of the holding case 18 at the two projecting ends. Note that each of the portions of the inner wall of the holding case 18 that partition the grooves 18a is provided with a stepped portion 18c and a protruding wall portion 18d that are disposed on both sides of the spindle 15 in the rotation direction. Each of the two ends of the pin member 19 is disposed so as to come into abutting engagement with the stepped portion 18c formed in the shape of a step and with the protruding wall portion 18d formed so as to protrude in the rotation direction of the spindle 15. Thereby, the pin member 19 constitutes a restricting portion of this embodiment that is provided in the spindle 15 and restricts the rotatable angle of the spindle 15 by being engaged with the holding case 18. Note that the pin member 19 is disposed such that its both ends can also be engaged with an edge portion 18b (see FIG. 4) of the holding case 18 at the other end of the spindle 15. This prevents withdrawal of the spindle 15 from the spindle holding means 16.

The rotation-urging spring 20 shown in FIG. 5 is provided as a coil spring. A plurality of (in this embodiment, two) rotation-urging springs 20 are provided, and are respectively disposed in a compressed state in the grooves 18a inside the holding case 18. Note that, in FIG. 5, a rotation direction of the spindle 15 in which the nut member 33 is deeply screwed to the spindle 15 (screwed in the braking direction, which is the direction toward the first piston 24) is indicated by the arrow D, and the rotation direction that is opposite to the aforementioned rotation direction is indicated by the arrow E. The rotation-urging springs 20 are each disposed so as to urge an end of the spindle 15 via the pin member 19 to the holding case 18 in the above-described opposite rotation direction indicated by the arrow E.

As described above, the spindle holding means 16 includes the holding case 18, the pin member 19, and the rotation-urging springs 20. Thereby, the spindle holding means 16 is configured to restrict the rotatable angle of the spindle 15 with respect to the first piston 24 and hold the spindle 15 with respect to the first piston 24 with the spindle 15 urged in the rotation direction that is opposite to the rotation direction in which the nut member 33 is deeply screwed to the spindle 15.

The brake cylinder device 1 is also provided with a cover portion 31. The cover portion 31 is provided on the second spring 26 side of the second piston 27, and is formed so as to surround and cover the spindle 15 penetrating the second piston 27 at an end disposed on the second spring 26 side with respect to the second piston 27. The cover portion 31 is formed to have, for example, a cylindrical outer shape, and is positioned so as to penetrate a hole portion provided at an end of the cylinder body 13 through the inside of the second spring 26 and project to the outside of the cylinder body 13. The cover portion 31 moves together with the second piston 27, and therefore the state of movement of the second piston 27, or in other words, the operating state of the spring brake means 12, can be visually confirmed from the outside of the cylinder body 13 with ease.

Here, the operation of the brake cylinder device 1 will be described. FIG. 3 is a cross-sectional view of the brake cylinder device 1 in a released state where neither the service brake means 11 nor the spring brake means 12 is in operation. For example, a state where no braking operation is performed during driving of a railroad vehicle corresponds to the state shown in FIG. 3. In this state, the service brake control device 103 performs control so as not to supply compressed air to the first pressure chamber 22 from the first air supply source 101 via the service brake control device 103 and the first port 43. Also, the compressed air inside the first pressure chamber 22 is spontaneously discharged via the service brake control device 103 and the first port 43. Therefore, the first piston 24 is urged in the anti-braking direction (the direction indicated by the arrow B in the drawing) by the first spring 23 inside the cylinder body 13 and the brake body 70, and the first piston 24 is in contact with an end of the inner tubular portion 30.

On the other hand, in the state shown in FIG. 3, compressed air is supplied from the second air supply source 102 to the second pressure chamber 25 via the spring brake control solenoid valve 104 and the second port 44 in accordance with the control of the spring brake control solenoid valve 104. This results in a state where the second piston 27 has moved in the anti-braking direction by the elastic force resulting from the action of the compressed air supplied to the second pressure chamber 25 against the elastic force of the second spring 26. In this state, the indented tooth 36a of the nut member 33 and the indented tooth 36b of the sleeve member 35 are not meshed with each other, forming a clearance.

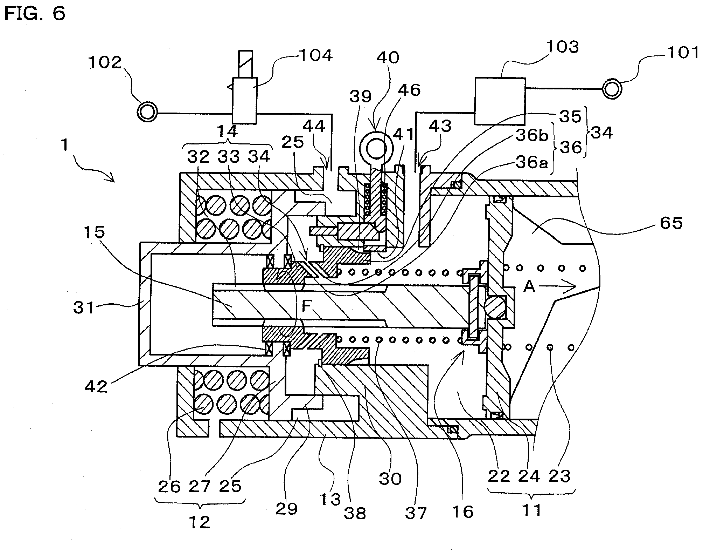

FIG. 6 is a cross-sectional view of the brake cylinder device 1, showing a state where the service brake means 11 is operated from the state shown in FIG. 3 where both the service brake means 11 and the spring brake means 12 are in a released state. The service brake means 11 is operated by supply of compressed air from the first air supply source 101 to the first pressure chamber 22 via the first port 43 in accordance with the control of the service brake control device 103. At this time, the first piston 24 moves in the braking direction (the direction indicated by the arrow A in the drawing) by the elastic force resulting from the action of the compressed air supplied to the first pressure chamber 22 against the elastic force of the first spring 23. Thereby, the wedges 65 move together with the first piston 24 in the braking direction, and the brake shoe 202 is pressed against the wheel tread as will be described below, generating a braking force. At this time, although the spindle 15 also moves in the braking direction together with the first piston 24, the nut member 33 is screwed to the screw 32 provided in the spindle 15. However, when the spindle 15 moves in the braking direction together with the first piston 24, the nut member 33 rotates in the direction indicated by the arrow F in the drawing together with the movement of the spindle 15 in the braking direction while being supported with the bearing 42, since the nut member 33 is supported rotatably with respect to the second piston 27 with the bearing 42. Accordingly, only the spindle 15 moves in the braking direction.

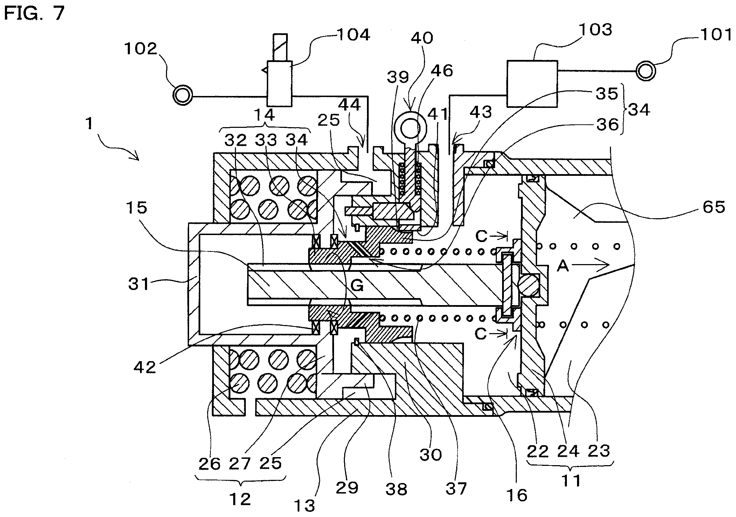

FIG. 7 is a cross-sectional view of the brake cylinder device 1, showing an initial state of operating the spring brake means 12. In the case of operating the spring brake means 12, for example, the spring brake means 12 is operated for being used as a parking brake or the like in a state where a railroad vehicle is completely stopped by operating the service brake means 11 (see FIG. 6). The spring brake means 12 is operated by discharge of the compressed air from the second pressure chamber 25 via the second port 44 and the spring brake control solenoid valve 104 in accordance with the control of the spring brake control solenoid valve 104.

When the compressed air supplied into the second pressure chamber 25 is discharged via the second port 44 and the spring brake control solenoid valve 104, the second piston 27 starts to move in the braking direction (the direction indicated by the arrow A in FIG. 7) by the elastic force of the second spring 26. At this time, the nut member 33 rotates in the direction indicated by the arrow G in FIG. 7 around the screw 32 of the spindle 15, as a result of which the second piston 27 starts to move together with the nut member 33 in the braking direction with respect to the spindle 15. Then, when the second piston 27 starts to move with respect to the spindle 15 in this manner, the nut member 33 comes into contact with the sleeve member 35. That is, as shown in FIG. 7, the meshing means 36 is brought into a state where the tip portion of the indented tooth 36a of the nut member 33 and the tip portion of the indented tooth 36b of the sleeve member 35 are in contact with each other, as a result of which the rotation of the nut member 33 is temporarily stopped.

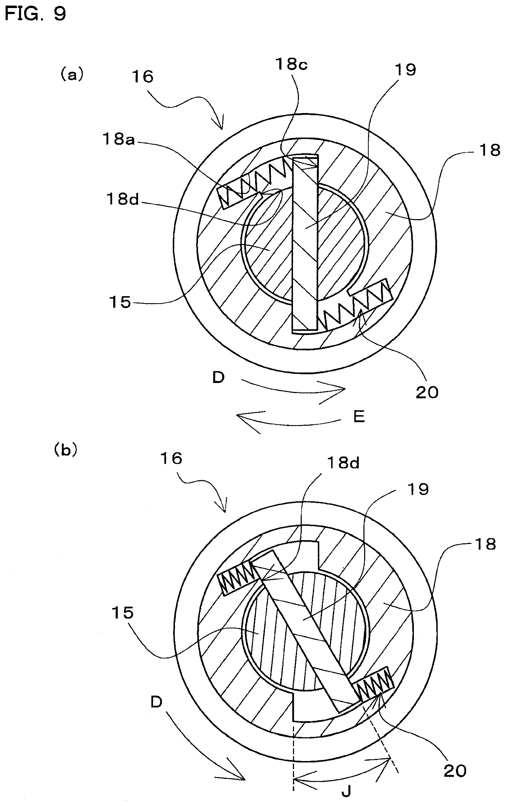

FIG. 9(a) is a cross-sectional view of the spindle holding means 16 and the spindle 15 taken at the position of the arrows C-C in FIG. 7. The spindle 15 is urged by the rotation-urging springs 20 in the opposite rotation direction (the direction indicated by the arrow E in the drawing) to the rotation direction in which the nut member 33 is deeply screwed to the spindle 15 via the pin member 19. Accordingly, in a state where the tip portions of the indented tooth 36a and the indented tooth 36b are in contact with each other as shown in FIG. 7, the position of the spindle 15 is held in a state where the two ends of the pin member 19 are engaged with the stepped portions 18c of the inner wall of the holding case 18 as shown in FIG. 9(a).

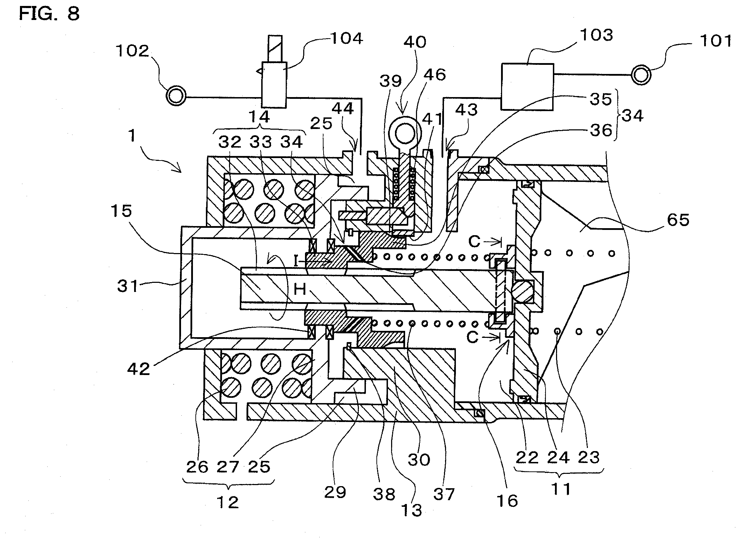

FIG. 8 is a cross-sectional view of the brake cylinder device 1, showing a state where the spring brake means 12 is sufficiently operated. Even if the tip portions of the indented tooth 36a and the indented tooth 36b have come into contact with each other and thus the rotation of the nut member 33 is stopped in the state shown in FIG. 7, the elastic force of the second spring 26 acts on the screw 32 of the spindle 15 via the second piston 27 and the nut member 33. At this time, the spindle 15 is held by the elastic force of the rotation-urging springs 20 at a position where the pin member 19 is in contact with the stepped portions 18c, as shown in FIG. 9(a). Accordingly, when the rotational force in the rotation direction indicated by the arrow D in FIG. 9(a) acts on the spindle 15, the spindle 15 is brought into a state where it can rotate in that rotation direction. When the elastic force of the second spring 26 acts on the spindle 15 via the meshing between the nut member 33 and the screw 32 as described above, the spindle 15 rotates in the rotation direction in which the nut member 33 is deeply screwed to the spindle 15 (the rotation direction indicated by the arrow H in FIG. 8 and the rotation direction indicated by the arrow D in FIG. 9(a)) against the spring force of the rotation-urging springs 20 acting on the pin member 19. Thereby, the nut member 33 slightly moves in the direction indicated by the arrow I in FIG. 8 (the same direction as the braking direction) so as to be deeply screwed to the spindle 15, and also slightly rotates. Then, the position where the indented tooth 36a comes into contact with the indented tooth 36b is slightly displaced from the position where their tip portions have come into contact with each other, and is adjusted to a position where the indented tooth 36a and the indented tooth 36b are meshed more deeply with each other.

FIG. 9(b) is a cross-sectional view of the spindle holding means 16 and the spindle 15 taken at the position of the arrows C-C in FIG. 8. As shown in FIG. 9(b), the spindle 15 becomes rotatable in the direction indicted by the arrow H in FIG. 8 until the two ends of the pin member 19 come into contact with the protruding wall portions 18d of the inner wall of the holding case 18. In other words, the pin member 19 becomes swingable in the angle range indicated by the double-ended arrow J in FIG. 9(b), and the rotatable angle of the spindle 15 is restricted.

When the indented tooth 36a and the indented tooth 36b are deeply meshed with each other and the meshing means 36 is thus brought into a sufficiently meshed state as shown in FIG. 8, the sleeve member 35 can be prevented from rotating together with the rotation in association with the movement of the sleeve member 35 in the braking direction in a state where the latch blade 39 of the sleeve member 35 and the blade edge 41 of the locking lever 40 are engaged with each other. Therefore, the rotation of the nut member 33 is eventually prevented by the anti-rotation means 34. When the meshing means 36 is brought into a meshed state, the nut member 33 and the sleeve member 35 slightly move together with the second piston 27 in the braking direction against the elastic force of the spring 37. However, the second piston 27, the nut member 33, and the sleeve member 35 are stopped in a state where the latch blade 39 of the sleeve member 35 and the blade edge 41 of the locking lever 40 have been deeply engaged in the axial direction.

By the meshing of the meshing means 36 as described above, the clutch mechanism 14 shifts from the disconnecting state to the connecting state. In the connecting state shown in FIG. 8, since the rotation of the nut member 33 is prevented by the anti-rotation means 34, the second piston 27 urges the spindle 15 via the nut member 33 in a state where it has moved in the braking direction by the elastic force of the second spring 26, as a result of which the spindle 15, the first piston 24, and the wedges 65 are kept in a state where they have moved in the braking direction. That is, a state where the spring brake means 12 is operated and the spring braking force is acted is maintained. Even if the reaction force from the brake shoe 202 pressed against the wheel tread acts on the wedges 65, the first piston 24, and the spindle 15 in the anti-braking direction so as to disengage the meshing means 36, the meshing means 36 will not be disengaged due to the deep meshing, and therefore the wedges 65, the first piston 24, and the spindle 15 are held at their positions in the braking state.

For example, in the case where it is desired that the spring braking force be released, including, for example, where it is desired that the parking position of a railroad vehicle be slightly moved by a tractor without necessitating operation of an air compressor, or where a railroad vehicle is moved by a tractor in a state where power is not supplied to the railroad vehicle, the spring braking force can be manually released by operating the locking lever 40. In this case, when the locking lever 40 is pulled up toward the outside of the cylinder body 13 by manual operation from the state where the spring brake means 12 is in operation as shown in FIG. 8, the blade edge 41 of the locking lever 40 is disengaged from the latch blade 39 of the sleeve member 35. Then, the meshing means 36 between the nut member 33 and the sleeve member 35 becomes rotatable while kept in the meshed state, and consequently the clutch mechanism 14 as a whole runs idle. Thereby, both the first piston 24 and the second piston 27 can move relatively to each other up to the stroke end by the elastic force of the first spring 23 and the second spring 26, and consequently the spindle 15, the first piston 24, and the wedges 65 move in the anti-braking direction. In this way, operating the locking lever 40 allows the spring braking force of the spring brake means 12 to be released manually, thereby moving a railroad vehicle or the like.

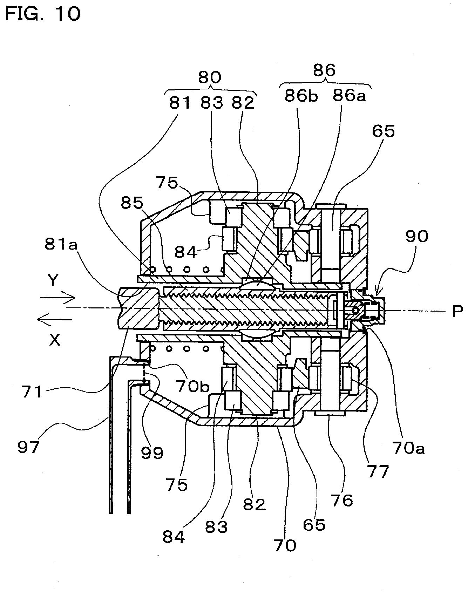

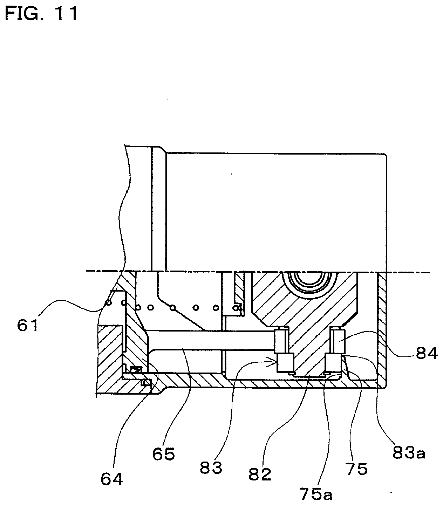

Next, the configuration other than the brake cylinder device 1 of the unit brake 100 will be described. FIG. 10 is a partial cross-sectional view taken at the position of the arrows M-M in FIG. 2. FIG. 11 is a partial cross-sectional view taken at the position of the arrows L-Lin FIG. 1. As shown in FIGS. 1, 2, 10, and 11, inside the brake body 70, an adjustor 80 is provided that is configured to advance to the wheel 201 in an advancing direction X (the direction indicated by the arrow X in FIGS. 1, 2, and 10) or retract from the wheel 201 in the opposite direction, i.e., a retracting direction Y (the direction indicated by the arrow Y in FIGS. 1, 2, and 10). The adjustor 80 includes a tubular sleeve portion 81 extending parallel to the advancing and retracting directions, a first supporting shaft 82 extending perpendicularly to the axial direction of the sleeve portion 81 from both side faces of the sleeve portion 81, and a rectangular slide plate 83 fitted into the first supporting shaft 82. Further, a first roller 84 is installed rotatably on the first supporting shaft 82.

Further, the brake body 70 includes a guide portion 75 that has a guide face 75a extending in the advancing and retracting directions so as to be orthogonal to the braking direction A and is formed so as to partly project from the inner face of the brake body 70. The adjustor 80 is attached to the brake body 70 such that the first supporting shaft 82 is perpendicular to the braking direction A, and is disposed so as to allow an edge face 83a of the slide plate 83 on the braking direction A side can slide against the guide face 75a of the guide portion 75 (see FIG. 11).

As shown in FIG. 10, a sheath rod 85 is installed inside the sleeve portion 81 of the adjustor 80. The sheath rod 85 is supported with respect to a sleeve inner circumferential face 81a via a spherical bearing 86 made up of a spherical member 86a installed on the outer circumference side of the sheath rod 85 and a shaft bush portion 86b installed on the sleeve inner circumferential face 81a, and is restricted for relative movement with respect to the sleeve portion 81 in the advancing and retracting directions. Thereby, the sheath rod 85 is configured to be able to advance or retract in association with the advancing or retracting movement of the adjustor 80.

The sheath rod 85 is a cylindrical member extending linearly, and is provided with a female thread formed over substantially the entire area of the inner circumferential face in the longitudinal direction. Note that the sheath rod 85 is supported by the sleeve portion 81 via the spherical bearing 86, and thus is swingable within a predetermined angle with respect to a cylinder center line P (indicated by the alternate long and short dash line in FIG. 10) of the sleeve portion 81 and also is rotatable about the cylinder center line P.

A male thread screwed to the female thread of the sheath rod 85 is formed on the outer circumferential face of the push rod 71 in the vicinity of the end that is opposite to the end at which the brake shoe 202 is attached. Note that the male thread portion of the push rod 71 is formed to have a length that is substantially the same as the length of the sheath rod 85. Also, the push rod 71 is installed in a state where the end at which the male thread is formed is screwed into the sheath rod 85. Thereby, the push rod 71 can advance or retract in association with the advancing or retracting movement of the sheath rod 85, thus making it possible to press the brake shoe 202 install on the tip against the tread 201a of the wheel 201 or move the brake shoe away from the tread 201a.

Further, the brake body 70 is provided with a second supporting shaft 76 extending perpendicular to the advancing and retracting directions of the adjustor 80 and the braking direction A in the vicinity of the end opposite to the wheel. A second roller 77 is supported rotatably by the second supporting shaft 76. Note that the first roller 84 and the slide plate 83 are each installed on the adjustor 80 in pairs symmetrically with respect to the sleeve portion 81, and the pair of the second rollers 77 are installed on the second supporting shaft 76 so as to oppose the pair of the first rollers 84. Further, the guide portions 75 are formed in pairs in the brake body 70 in positions corresponding to the positions of the pair of the slide plates 83.

The wedges 65 are fixed to the first piston 64 such that their end is inserted between the first roller 84 and the second roller 77. The wedge 65 has a reaction face 65b coming into contact with the second roller 77 and extending parallel to the direction of movement of the first piston 64 and an inclined acting face 65a that is inclined so as to come closer to the reaction face 65b as it approaches the end opposite to the first piston 84 and to come into contact with the first roller 64. In other words, the inclined acting face 65a is configured as an acting face that is inclined so as to move down in the retracting direction Y of the adjustor 80 toward the braking direction A.

Next, the operation of the unit brake 100 will be described. First, in the case of operating the service brake means 11, compressed air is supplied to the first pressure chamber 22 via the first port 43 in accordance with a command from a controller (not shown), and thereby the first piston 24 moves in the braking direction A (see FIG. 6). At this time, the wedges 65 move in the braking direction A in association with the movement of the first piston 24.

Upon movement of the wedges 65 in the braking direction A, the reaction face 65b moves in the braking direction A while coming into contact with the second rollers 77, and the inclined acting face 65a that is inclined with respect to the reaction face 65b moves in the braking direction A while urging the first rollers 84 installed on the adjustor 80. At this time, an elastic force having at least a force component in the advancing direction X is acted on the first rollers 84 from the inclined acting face 65a. Since the adjustor 80 is restricted for the movement in the braking direction A by the guide face 75a, the adjustor 80 moves in the advancing direction X against the elastic force of the spring 88 disposed around the sleeve portion 81, while bringing the slide plates 83 into contact with the guide face 75a. As a result, the push rod 71 (see FIG. 10) that is connected to the sleeve portion 81 via the spherical bearing 86 and the sheath rod 85 also moves in the advancing direction X. Thereby, the brake shoe 202 attached to the push rod 71 is pressed against the wheel 201, thus braking the rotation of the wheel 201.

On the other hand, in the case of relaxing the service brake means 11, compressed air is discharged from the first pressure chamber 22 via the first port 43 in accordance with a command from the controller (not shown), and thereby the first piston 24 moves in the anti-braking direction B. At this time, the wedges 65 move in the anti-braking direction B in association with the movement of the first piston 24. At this time, the adjustor 80 is pressed in the retracting direction Y by the elastic force of the spring 88, and therefore the first rollers 84 in contact with the inclined acting face 65a move in the retracting direction Y upon movement of the wedges 65 in the anti-braking direction B. In association with the movement of the adjustor 80 in the retracting direction Y, the push rod 71 also moves in the retracting direction Y. Thereby, the brake shoe 202 attached to the push rod 71 also moves in the retracting direction Y and is separated from the wheel 201, thus releasing the brake of the wheel 201.

As described above, with the unit brake 100, the clutch mechanism 14 establishes the connecting state where the spindle 15 that transmits the elastic force from the spring brake means 12 to the first piston 24 is connected to the second piston 27 when compressed air is discharged from the second pressure chamber 25. On the other hand, in a state where compressed air is supplied to the second pressure chamber 25, the clutch mechanism 14 establishes the disconnecting state where the spindle 15 and the second piston 27 are disconnected. Therefore, the clutch mechanism 14 switches the operation of connecting the spring brake means 12 and the service brake means 11 according to the operation of the spring brake means 12, thus switching between transmission and interruption of the elastic force of the spring brake means 12.

With the unit brake 100, the spindle 15 is connected rotatably to the first piston 24, and the spindle holding means 16 is provided that restricts the rotatable angle of the spindle 15 with respect to the first piston 24 and that holds the spindle 15 in a state where the spindle 15 is urged in the rotation direction that is opposite to the rotation direction of the spindle 15 in which the nut member 33 is deeply screwed to the spindle 15. Therefore, when the nut member 33 that has moved together with the second piston 27 with respect to the spindle 15 comes into contact with the sleeve member 35 at the tip portions of the indented teeth (36a, 36b) while the clutch mechanism 14 is shifting to the connecting state, the spindle 15 is held by the spindle holding means 16 so as to be rotatable within a predetermined angle range to the rotation direction in which the nut member 33 is deeply screwed to the spindle 15. Then, when the elastic force of the second spring 26 further acts on the second piston 27 in a state where the tip portion of the indented tooth 36a of the nut member 33 is in contact with the indented tooth 36b of the sleeve member 35, this elastic force acting via the nut member 33 causes the spindle 15 to rotate within the predetermined angle range in the rotation direction in which the nut member 33 is more deeply screwed. Thereby, the nut member 33 moves with respect to the spindle 15 such that the indented teeth (36a, 36b) of the nut member 33 and the sleeve member 35 are more deeply meshed with each other, thus connecting the spindle 15 and the second piston 27 more firmly. This can prevent disengagement of the meshing portions (the meshing means 36) of the clutch mechanism 14 even if the first piston 24 is pressed by the reaction force from the brake shoe or the like in the direction opposite to the braking direction as a result of a reduced elastic force acted on the first piston 24 by the action of the first pressure chamber 22 due to a gradual release of the compressed air from the first pressure chamber 22 of the service brake means 11. Accordingly, it is possible to prevent an unintentional release of the braking force of the spring brake means 12 used as a parking brake or the like.

Accordingly, with the unit brake 100, it is possible to prevent an unintentional release of the braking force of the spring brake means 12 due to disengagement of the meshing portions of the clutch mechanism 14, for the unit brake 100 provided with the clutch mechanism 14 that switches between transmission and interruption of the elastic force of the spring brake means 12.

Note that the same effect as described above can also be achieved for an embodiment of the brake cylinder device 1 according to the present invention, as with the embodiment of the unit brake 100 according to the invention. That is, the same effect as described above can also be achieved for an embodiment of a brake cylinder device 1 including: a service brake means 11 including a first piston 24 on which a first pressure chamber 22 and a first spring 23 act in opposite directions, the first piston moving in a braking direction by supply of pressure fluid to the first pressure chamber 22 against an elastic force of the first spring 23; and a spring brake means 12 including a second piston 27 on which a second pressure chamber 25 and a second spring 26 act in opposite directions, the second piston moving in the braking direction by an elastic force of the second spring due to a transition from a state where pressure fluid is supplied to the second pressure chamber 25 to a state where pressure fluid is discharged from the second pressure chamber 25, both the service brake means 11 and the spring brake means 12 being capable of being operated, wherein the brake cylinder device further includes: a spindle 15 that is connected to the first piston 24 so as to be rotatable about an axial direction, that penetrates the second piston 27, and that transmits an elastic force from the spring brake means 12 to the first piston 24; a first clutch mechanism 14 that includes a first nut member 33 supported rotatably with respect to the second piston 27 and screwed to the spindle 15, that establishes a connecting state where the spindle 15 and the second piston 27 are connected by movement of the first nut member 33 together with the second piston 27 with respect to the spindle 15 by an elastic force of the second spring 26, due to a transition from a state where pressure fluid is supplied to the second pressure chamber 25 to a state where pressure fluid is discharged from the second pressure chamber 25, and that establishes a disconnecting state where the spindle 15 and the second piston 27 are disconnected in a state where pressure fluid is supplied to the second pressure chamber 25; and a first spindle holding means 16 that restricts a rotatable angle of the spindle 15 with respect to the first piston 24 and that holds the spindle 15 with respect to the first piston 24 in a state where the spindle 15 is urged in a rotation direction that is opposite to a rotation direction of the spindle 15 in which the first nut member 33 is deeply screwed to the spindle 15.

With the unit brake 100, the spindle holding means 16 can be realized with a simple configuration in which the holding case 18 is attached to the first piston 24, the spindle 15 is provided with the pin member 19 serving as a restricting portion, and the rotation-urging springs 20 are disposed inside the holding case 18. Accordingly, it is possible to easily realize a spindle holding means 16 that restricts the rotatable angle of the spindle 15 with respect to the first piston 24 and that holds the spindle 15 with respect to the first piston 24 in a state where the spindle 15 is urged in a predetermined rotation direction, while realizing a configuration that is not susceptible to malfunction, thus also achieving an increased reliability.

Note that the same effect as described above can also be achieved for an embodiment of the brake cylinder device 1 according to the present invention, as with the embodiment of the unit brake 100 according to the present invention. That is, the same effect as described above can also be achieved for an embodiment of the above-described brake cylinder device 1, wherein the first spindle holding means 16 includes: a holding case 18 that is fixed to the first piston 24 and that holds an end of the spindle 15 such that the end is accommodated therein; a restricting portion 19 that is provided in the spindle 15 and that restricts a rotatable angle of the spindle 15 by engaging the holding case 18; and a rotation-urging spring 20 that urges the end of the spindle 15 in the opposite rotation direction with respect to the holding case 18 inside the holding case 18.

With the unit brake 100, a restricting portion can be formed in a simple manner as the pin member 19 coming into contact with the inner wall of the holding case 18. Furthermore, it is possible to easily realize a configuration that urges the spindle 15 in a predetermined rotation direction by urging the pin member 19 by a plurality of rotation-urging springs 20. Accordingly, it is possible to realize a configuration that is not susceptible to malfunction, thus also achieving an increased reliability.

Note that the same effect as described above can also be achieved for an embodiment of the brake cylinder device 1 according to the present invention. That is, the same effect as described above can also be achieved for an embodiment of the above-described brake cylinder device 1, wherein the restricting portion 19 is provided as a pin member 19 that is attached to the spindle 15 so as to penetrate the end of the spindle 15 and ends of the restricting portion 19 projecting from the spindle 15 come into abutting engagement with an inner wall of the holding case 18, and a plurality of the rotation-urging springs 20 are provided, and the rotation-urging springs 20 urge the end of the spindle 15 in the opposite rotation direction with respect to the holding case 18 via the pin member 19.

With the unit brake 100, the spindle 15 is held by the spindle holding means 16 with respect to the first piston 24 via the ball member 17 disposed between an end of the spindle 15 and the first piston 24 while being accommodated in the recess 24a. Accordingly, the rotation operation of the spindle 15 can be performed smoothly via the rollable ball member 17, and the inclination of the first piston 24 with respect to the spindle 15 can be absorbed.

Note that the same effect as described above can also be achieved for an embodiment of the brake cylinder device 1 according to the present invention. That is, the same effect as described above can also be achieved for an embodiment of the above-described brake cylinder device 1, wherein a ball member 17 that is disposed so as to be accommodated in a recess 24a formed in at least one of the spindle 15 and the first piston 24 is provided between the end of the spindle 15 and the first piston 24.

With the unit brake 100, the first piston 24 moves in the braking direction A, and thereby the wedges 65 that are fixedly installed on the first piston 24 also moves in the same direction. At this time, the inclined acting face 65a of the wedges 65 comes into contact with the first roller 84, thus urging the first roller 84 in the advancing direction X. Thereby, the adjustor 80 on which the first roller 84 is installed moves in the advancing direction X together with the first roller 84, and therefore the push rod 71 that is attached to the adjustor 80 also moves in the advancing direction X. Then, the brake shoe 202 attached to the tip of the push rod 71 comes into contact with the wheel 201, thus braking the rotation of the wheel 201 by friction. With the unit brake 100, the brake cylinder device 1 is disposed such that the direction of movement of the first piston 24 and the axle shaft of the wheel 201 are parallel to each other, and therefore it is possible to effectively utilize the space of the axle shaft in the axial direction, and also reduce the space required for installation of the unit brake 100 in the height direction of the vehicle.

Furthermore, with the unit brake 100, the force of pressing the brake shoe 202 against the wheel 201 can be adjusted by adjusting the gradient of the inclined acting face 65a with respect to the direction of movement of the first piston 24. With the unit brake 100, the movements of the adjustor 80 in directions other than the advancing and retracting directions are allowed since the spherical bearing 86 is used.

Next, a position adjusting mechanism of the brake shoe 202 provided in the unit brake 100 will be described. As shown in FIG. 10, an adjustable nut 90 serving as a rotating means for relatively rotating the sheath rod 85 with respect to the push rod 71 is provided at the end of the sheath rod 85 in the retracting direction Y. Since the adjustable nut 90 is provided at the end of the sheath rod 85, the push rod 71 screwed into the sheath rod 85 can be advanced and retracted by rotating the sheath rod 85 by applying a rotational force to the adjustable nut 90 from outside. Consequently, it is possible to easily adjust the clearance between the brake shoe 202 attached to the tip of the push rod 71 and the wheel 201.

Finally, a ventilation channel formed in the unit brake 100 will be described. As shown in FIGS. 1 and 10, a ventilation hole 70b is formed in the brake body 70 below the position where the push rod 71 extends, and a ventilation tube 97, which is a tubular member made of, for example, an elastic member such as rubber, is installed in the ventilation hole 70b. The ventilation tube 97 is formed so as to extend from the portion where it is connected to the ventilation hole 70b toward the wheel 201 and then is bent downward at 90 degrees. This provides a configuration that can prevent water or the like from entering into the brake body 70 or the like through the ventilation tube 97 from outside. Further, a disc-like or domical filter 99 for preventing entry of a foreign object is fitted in the ventilation tube 97.

### (Second Embodiment)

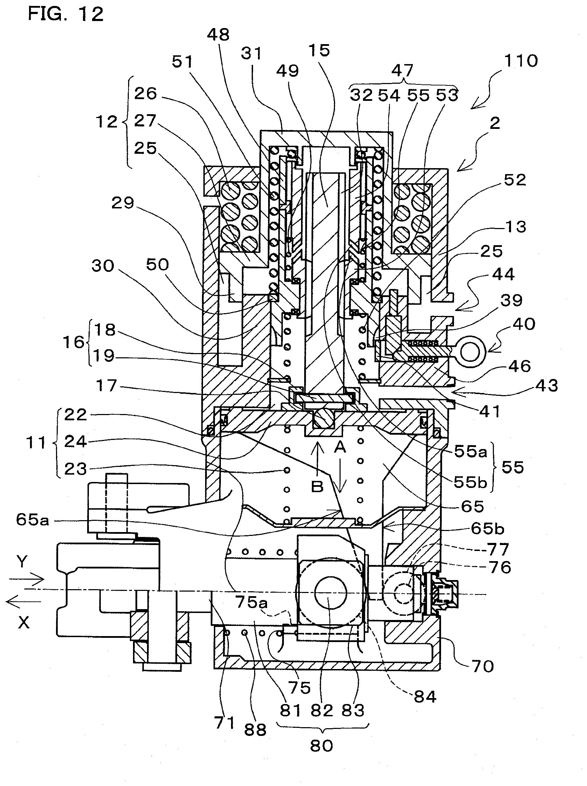

A unit brake 110 according to a second embodiment will now be described. FIG. 12 is a partial cross-sectional view of the unit brake 110 according to the second embodiment. The unit brake 110 shown in FIG. 12 includes a brake cylinder device 2 according to the second embodiment and a brake body 70 to which the brake cylinder device 2 is attached and that is formed in the shape of a box so as to cover a portion of a drive mechanism of the brake. The unit brake 110 is configured in the same manner as the unit brake 100 of the first embodiment shown in FIG. 1, and is configured to brake the rotation of the wheel 201 by friction by operating at least one of a service brake means 11 and a spring brake means 12, thereby bringing, into contact with a tread of the wheel of a vehicle, a braking surface of a brake shoe that is held so as be movable relative to the brake body 70 (see FIG. 1). However, the unit brake 110 is different from the unit brake 100 of the first embodiment with respect to a portion of the configuration of the brake cylinder device 2. Note that in the following description of the unit brake 110, the configuration different from the first embodiment will be described, and the description of those elements configured in the same manner as the first embodiment is omitted by using the same reference numerals in the drawings.

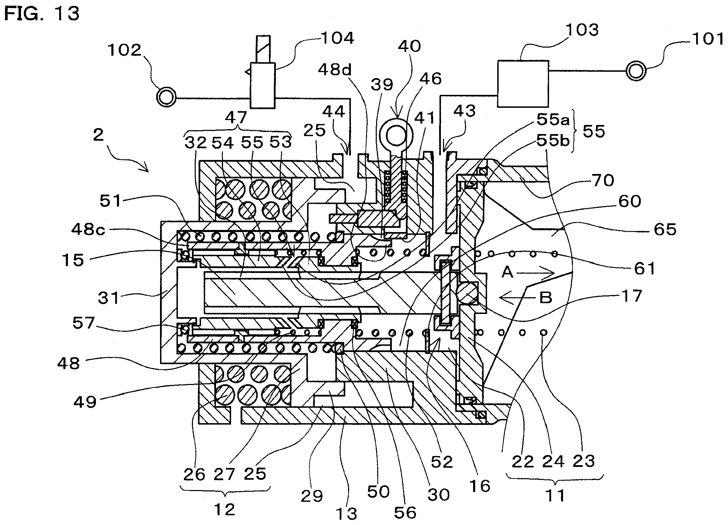

FIG. 13 is a cross-sectional view of a portion of the brake cylinder device 2 of the unit brake 110 shown in FIG. 12. Note that in FIG. 13, the orientation of the brake cylinder device 2 is changed from the state shown in FIG. 2. The brake cylinder device 2 shown in FIGS. 12 and 13 includes a service brake means 11 operated by pressure fluid such as compressed air and a spring brake means 12 operated by the elastic force of a spring, and is configured as a brake cylinder device in which both the service brake means 1 1 and the spring brake means 12 are capable of being operated. The brake cylinder device 2 can be used as a brake cylinder device for railway vehicles when provided in the unit brake 110. However, the brake cylinder device 2 is not limited to this example and can be widely applied to various uses.

As shown in FIGS. 12 and 13, the brake cylinder device 2 includes a cylinder body 13, a service brake means 11, a spring brake means 12, a clutch mechanism (a second clutch mechanism in this embodiment) 47, a clutch box 48, a separating spring 49, an engaging member 50, an engaging spring 51, a clutch box spring 52, a locking lever 40, a spindle 15, a spindle holding means (a second spindle holding means in this embodiment) 16, and so forth. Note that the service brake means 11, the spring brake means 12, the clutch mechanism 47, the clutch box 48, the separating spring 49, the engaging member 50, the engaging spring 51, the clutch box spring 52, the spindle 15, and the spindle holding means 16 are disposed such that they are enclosed in the cylinder body 13.

The service brake means 11, the spring brake means 12, the cylinder body 13, and the spindle 15 are configured in the same manner as in the first embodiment. The service brake means 11 includes a first pressure chamber 22, a first spring 23, and a first piston 24 that are configured in the same manner as in the first embodiment. Likewise, the spring brake means 12 includes a second pressure chamber 25, a second spring 26, and a second piston 27 that are configured in the same manner as in the first embodiment. Further, a cover portion 31 is fixed to the second piston 27. The cover portion 31 is formed so as to project cylindrically with respect to the second piston 27 in the anti-braking direction (the direction indicated by the arrow B in FIGS. 12 and 13) that is opposite to the braking direction (the direction indicated by the arrow A in FIGS. 12 and 13), and is provided so as to cover the end of the spindle 15 in the anti-braking direction.

The clutch mechanism 47 shown in FIGS. 12 and 13 includes a screw 32, a nut member (a second nut member in this embodiment) 53, a sleeve member 54, and a meshing means 55. The screw 32 is formed on the outer circumference of an end of the spindle 15. The nut member 53 is disposed in a state where it is screwed to and meshed with the screw 32, and is supported rotatably with respect to a clutch box 48, which will be described below, via a bearing 56. Thereby, the nut member 53 is configured to be screwed to the screw 32 and rotated by the relative movement between the spindle 15 and the clutch box 48. Further, the nut member 53 is supported so as to be movable in the anti-braking direction together with the clutch box 48.

The sleeve member 54 is formed as a tubular member, is disposed in the anti-braking direction with respect to the nut member 53, and is provided so as to oppose the nut member 53 around the spindle 15. Also, the sleeve member 54 is supported rotatably with respect to the inside of the cover portion 31 via a thrust bearing 57 at its end in the anti-braking direction. This provide a configuration in which when the second piston 27 moves in the braking direction with respect to the spindle 15 by the elastic force of the second spring 26, the sleeve member 54 also moves with respect to the spindle 15 in the braking direction together with the second piston 27 via the cover portion 31 and the thrust bearing 57.

The meshing means 55 is provided at portions where the nut member 53 and the sleeve member 54 oppose each other. The meshing means 55 is made up of a indented tooth 55a formed at the end of the nut member 53 on the side opposing the sleeve member 54 and a indented tooth 55b formed at the end of the sleeve member 54 on the side opposing the nut member 53. Upon movement of the second piston 27 with respect to the spindle 15, the sleeve member 54 moves together with the second piston 27, and consequently the indented tooth 55b of the sleeve member 54 and the indented tooth 55a of the nut member 53 are meshed with each other. The meshing means 55 is provided as a means for preventing the rotation of the nut member 53, together with the sleeve member 54 and a clutch box 48, which will be described below.

In this way, the clutch mechanism 47 including the screw 32, the nut member 53, the sleeve member 54, and the meshing means 55 is configured to establish a connecting state where the spindle 15 and the second piston 27 are connected by movement of the sleeve member 54 together with the second piston 27 with respect to the spindle 15 by the elastic force of the second spring 26 and is meshed with the nut member 53, due to a transition from a state where compressed air is supplied to the second pressure chamber 25 to a state where compressed air is discharged from the second pressure chamber 25. On the other hand, in a state where compressed air is supplied to the second pressure chamber 25, the sleeve member 54 is separated from the nut member 53 and thus the indented tooth 55a and the indented tooth 55b are not meshed with each other, resulting in a state where the nut member 53 is rotatable. Therefore, in a state where compressed air is supplied to the second pressure chamber 25, the clutch mechanism 47 is configured to establish a disconnecting state where the spindle 15 and the second piston 27 are disconnected.

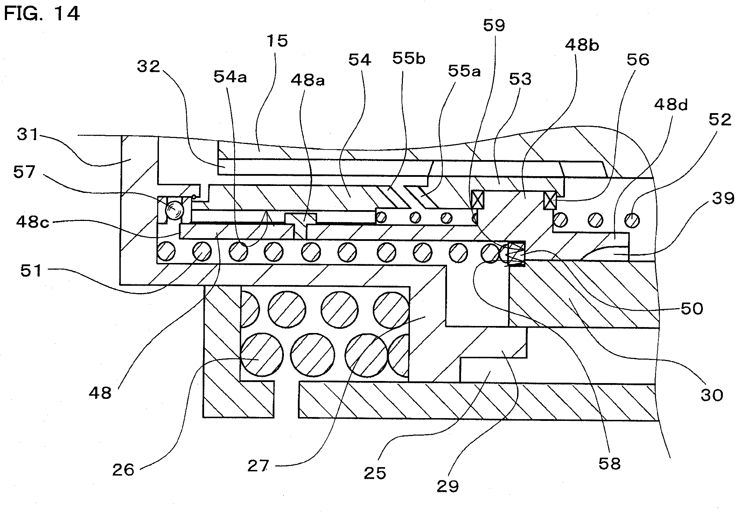

The clutch box 48 is formed as a tubular member in which the sleeve member 54 and the nut member 53 are disposed. FIG. 14 is an enlarged cross-sectional view, showing in enlargement, a cross section of a portion of the clutch box 48 shown in FIG. 13 and a portion in the vicinity thereof. As clearly shown in FIG. 14, a plurality of (for example, two) sliding grooves 54a extending straight in the axial direction (the direction parallel to the axial direction of the spindle 15) are formed in the outer circumference of the sleeve member 54. Also, sliding projections 48a are provided on the inner wall of the clutch box 48 at positions corresponding to the positions of the sliding grooves 54a. The sliding projections 48a are each provided as a protruding portion fixed to the clutch box 48 and projecting toward the sliding groove 54a inside the clutch box 48, and are each formed to have a pair of parallel side faces coming into slidable contact with a pair of parallel wall faces of the sliding groove 54a. Thereby, the sleeve member 54 is supported with respect to the clutch box 48 so as to be slidable parallel to an axial direction of the spindle 15 in a state where the rotational displacement of the spindle 15 about the axial direction is restricted. In other words, the clutch box 48 is configured to support the sleeve member 54 so as to be slidable within the clutch box 48 along the direction of movement of the second piston 27.

As clearly shown in FIG. 14, an inner flange portion 48b projecting inward in a flange shape and disposed in the braking direction with respect to the sleeve member 54 is provided on the inner wall of the clutch box 48. The nut member 53 is supported rotatably with respect to the inner flange portion 48b via a bearing 56, and thereby the clutch box 48 holds the nut member 53 so as to be rotatable within the clutch box 48. In addition, a separating spring 49 is disposed between the inner flange portion 48b and the sleeve member 54. The separating spring 49 is disposed between the sleeve member 54 and the inner flange portion 48b so as to urge one of the sleeve member 54 and the inner flange portion 48b in a direction away from the other of the sleeve member 54 and the inner flange portion 48b.

The clutch box 48 is held, with respect to the cylinder body 13 inside of which the second pressure chamber 25 is partitioned, so as to be rotatable about the axial direction of the spindle 15 and so as to be slidable parallel to the axial direction. Note that as clearly shown in FIG. 14, in the inner wall portion of the inner tubular portion 30 constituting a sliding holding portion slidably holding the clutch box 48, a first engaging portion 58 that is formed so as to oppose the second piston 27 and to be recessed in a step shape along the inner circumferential direction is provided in the cylinder body 13. Meanwhile, a second engaging portion 59 that is formed so to oppose the second piston 27 and to be recessed in a step shape across the outer circumferential direction is provided in the outer wall portion of the clutch box 48 at positions substantially opposing the first engaging portion 58. Also, an engaging member 50 formed as a ring-shaped member is disposed so as to be engageable with the first engaging portion 58 and the second engaging portion 59. Note that the engaging member 50 is disposed so as to be engaged with the first engaging portion 58 on the outer circumference, and is disposed so as to be engaged with the second engaging portion 59 on the inner circumference.

As clearly shown in FIGS. 13 and 14, an engaging spring 51 is disposed between the cover portion 31 and the engaging member. The engaging spring 51 is disposed so as to urge the engaging member 50 in the direction in which the engaging member 50 is engaged with the first engaging portion 58 and the second engaging portion 59 (in the braking direction). In addition, the engaging spring 51 comes into contact with the inner bottom of the cover portion 31 on the opposite side to the side on which the engaging spring 51 comes into contact with the engaging member 50, and is disposed between the outer wall of the clutch box 48 and the inner wall of the cover portion 31. A clutch box spring 52 is disposed between the inner flange portion 48b of the clutch box 48 and a stopper ring 61 that is disposed in a location further advanced in the braking direction than the inner flange portion 48b and is attached to the inner wall of the inner tubular portion 30 in the cylinder body 13. The clutch box spring 52 is disposed so as to urge the clutch box 48 with respect to the cylinder body 13 in a direction opposite to the engaging spring 51. In addition, the spring constant of the engaging spring 51 is set such that the spring force of the engaging spring 51 is greater than that of the clutch box spring 52.

As described above, the first engaging portion 58, the second engaging portion 59, and the engaging member 50 are provided, and the engaging spring 51 and the clutch box spring 52 apply elastic forces in directions opposite to each other to the clutch box 48, and thereby the clutch box 48 is held so as to be slidable within the cylinder body 13 along the axial direction of the spindle 15. Also, the clutch box 48 is held, with respect to the cylinder body 13 so as to be slidable together with the nut member 53 in the anti-braking direction in a state where the spring brake means 12 is operated.

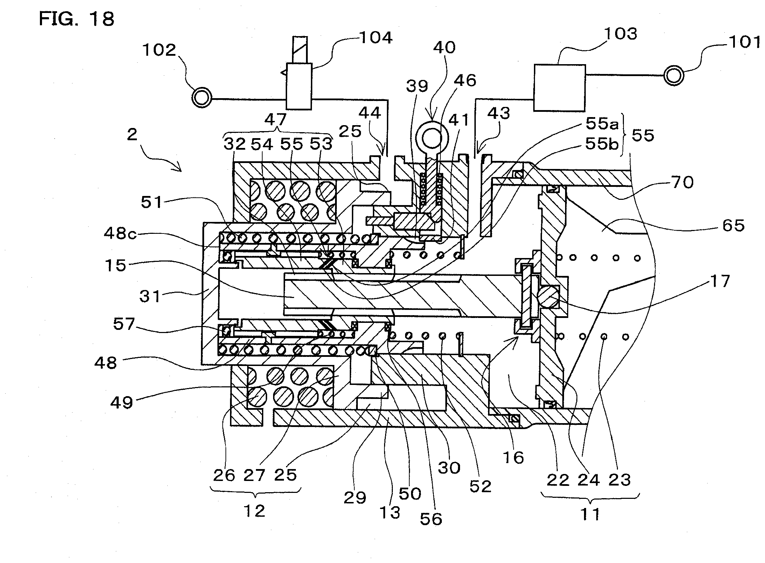

An end 48c (see FIGS. 13 and 14) of the clutch box 48 in the anti-braking direction is provided as a clutch box movement restricting portion that comes into contact with the cover portion 31, thereby restricting the allowable relative movement of the clutch box 48 in the anti-braking direction with respect to the second piston 27. The allowable movement of the clutch box 48 with respect to the second piston 27 in the anti-braking direction is set to be shorter than the allowable relative displacement in which the sleeve member 53 can be relatively displaced with respect to the clutch box 48 (see FIG. 18).

Inside the cylinder body 13, a space area 60 is formed in a location further advanced in the braking direction than the end of the clutch box 48 in the braking direction in the area between the end of the clutch box 48 and the stopper ring 61. Thereby, the clutch box 48 is held slidably with respect to the cylinder body 13 body so as to be able to project and move in the space area 60 in the braking direction.

The locking lever 40 is provided as a mechanism that can release the spring braking force of the spring brake means 12 by an operation of pulling one end of the eyenut that is disposed projecting from the cylinder body 13, as in the first embodiment. The clutch box 48 is configured to be able to be prevented from rotating in one direction by the locking lever 40. Specifically, an extension 48d extended so as to project further in the braking direction than the nut member 53 is provided at the end of the clutch box 48 in the braking direction, and a latch blade 39 is formed on the outer circumference of the extension 48d. A blade edge 41 that is urged by a spring 46 toward the latch blade 39 is provided at the tip of the other end of the locking lever 40. The latch blade 39 and the blade edge 41 serve as a one-way clutch that prevent the rotation causing the spindle 15 to move in the anti-braking direction but allows the rotation causing the spindle 15 to move in the braking direction, for the nut member 53 meshed with the sleeve member 54 whose rotational displacement with respect to the clutch box 48 is restricted.

Note that the blade edge 41 of the locking lever 40 at the other end is configured to be urged toward the latch blade 39 by the spring 46 and disengaged from the latch blade 39 against the elastic force of the spring 46 when the eyenut is pulled up. In this way, the locking lever 40 is configured such that the rotational displacement of the clutch box 48 with respect to the cylinder body 13 is restricted by engagement of the other end of the locking lever 40 with the clutch box 48 at the extension 48d and the locking lever 40 and the extension 48d are disengaged by an operation of pulling the one end of the locking lever 40. Also, the latch blade 39 at the extension 48d of the clutch box 48 extends in the braking direction, and the blade edge 41 of the locking lever 40 is engaged with the end of the latch blade 39 in the braking direction, and therefore the latch blade 30 and the blade edge 41 can be kept engaged even if the clutch box 48 slides in the braking direction.

The spindle holding means 16 includes a holding case 18, a pin member 19, and rotation-urging springs 20 that are configured in the same manner as those of the spindle holding means 16 of the first embodiment. The spindle holding means 16 is configured to restrict the rotatable angle of the spindle 15 with respect to the first piston 24 and hold the spindle 15 with respect to the first piston 24 in a state where the spindle 15 is urged in a rotation direction that is opposite to the rotation direction of the spindle 15 in which the nut member 53 is deeply screwed to the spindle 15.

Next, the operation of the brake cylinder device 2 will be described. FIG. 13 is a cross-sectional view of the brake cylinder device 2 in a released state where neither the service brake means 11 nor the spring brake means 12 is in operation. For example, a state where no braking operation is performed during driving of a railroad vehicle corresponds to the state shown in FIG. 13. In this state, the service brake control device 103 performs control so as not to supply compressed air to the first pressure chamber 22 from the first air supply source 101 via the service brake control device 103 and the first port 43. Also, the compressed air inside the first pressure chamber 22 is spontaneously discharged via the service brake control device 103 and the first port 43. Therefore, the first piston 24 is urged in the anti-braking direction (the direction indicated by the arrow B in the drawing) by the first spring 23 inside the cylinder body 13 and the brake body 70, and the first piston 24 is in contact with an end of the inner tubular portion 30.

On the other hand, in the state shown in FIG. 13, compressed air is supplied from the second air supply source 102 to the second pressure chamber 25 via the spring brake control solenoid valve 104 and the second port 44 in accordance with the control of the spring brake control solenoid valve 104. This results in a state where the second piston 27 has moved in the anti-braking direction by the elastic force resulting from the action of the compressed air supplied to the second pressure chamber 25 against the elastic force of the second spring 26. In this state, the indented tooth 55a of the nut member 53 and the indented tooth 55b of the sleeve member 54 are not meshed with each other, forming a clearance.

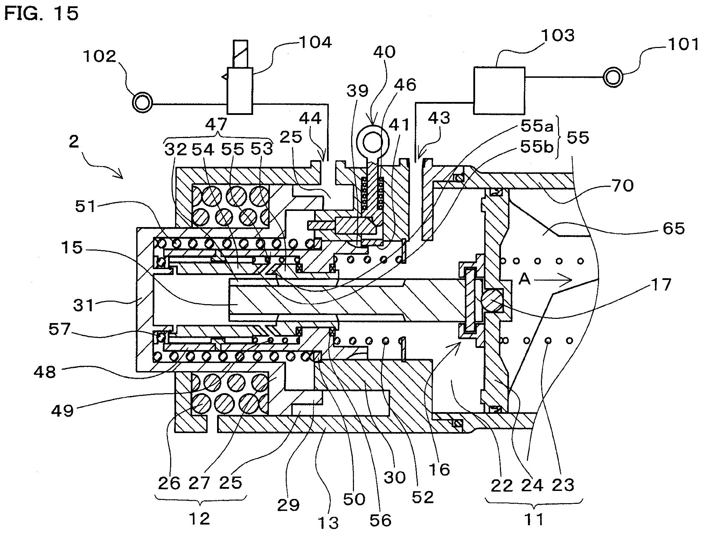

FIG. 15 is a cross-sectional view of the brake cylinder device 2, showing a state where the service brake means 11 is operated from the state shown in FIG. 13 where both the service brake means 11 and the spring brake means 12 are in a released state. The service brake means 11 is operated by supply of compressed air from the first air supply source 101 to the first pressure chamber 22 via the first port 43 in accordance with the control of the service brake control device 103. At this time, the first piston 24 moves in the braking direction (the direction indicated by the arrow A in the drawing) by the elastic force resulting from the action of the compressed air supplied to the first pressure chamber 22 against the elastic force of the first spring 23. Thereby, the wedges 65 move together with the first piston 24 in the braking direction, and, as in the first embodiment, the brake shoe is pressed against the wheel tread, generating a braking force. At this time, although the spindle 15 also moves in the braking direction together with the first piston 24, the nut member 53 is screwed to the screw 32 provided in the spindle 15. However, when the spindle 15 moves in the braking direction together with the first piston 24, the nut member 53 rotates together with the movement of the spindle 15 in the braking direction while being supported by the clutch box 48, since the nut member 33 is supported rotatably with respect to the clutch box 48 with the bearing 56. Accordingly, only the spindle 15 moves in the braking direction.

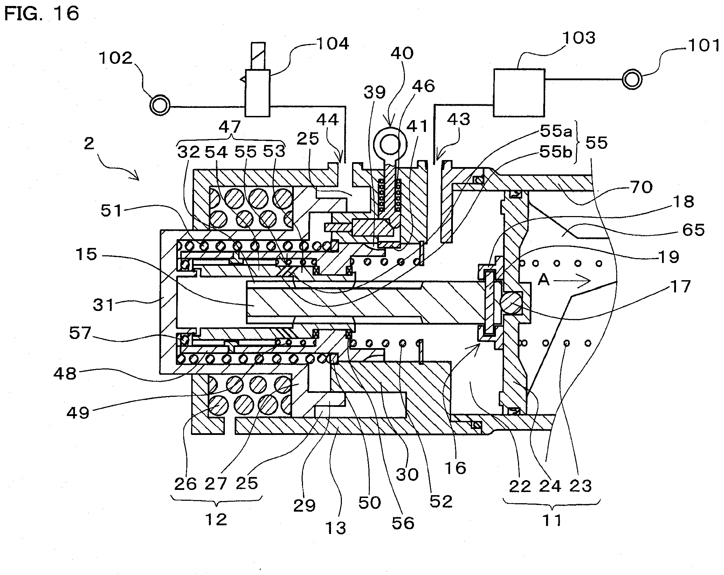

FIG. 16 is a cross-sectional view of the brake cylinder device 2, showing an initial state of operating the spring brake means 12. In the case of operating the spring brake means 12, for example, the spring brake means 12 is operated for being used as a parking brake or the like in a state where a railroad vehicle is completely stopped by operating the service brake means 11 (see FIG. 15). The spring brake means 12 is operated by discharge of the compressed air from the second pressure chamber 25 via the second port 44 and the spring brake control solenoid valve 104 in accordance with the control of the spring brake control solenoid valve 104.

When the compressed air supplied into the second pressure chamber 25 is discharged via the second port 44 and the spring brake control solenoid valve 104, the second piston 27 starts to move in the braking direction (the direction indicated by the arrow A in FIG. 16) by the elastic force of the second spring 26. At this time, the sleeve member 54 that is supported via the thrust bearing 57 by the cover portion 31 fixed to the second piston 27 starts to move together with the second piston 27 in the braking direction with respect to the spindle 15. Note that, at this time, the sleeve member 54 moves in the braking direction with respect to the clutch box 48 through the sliding operation between the sliding groove 54a and the sliding projection 48a. Then, when the second piston 27 starts to move together with the sleeve member 54 with respect to the spindle 15 in this manner, the sleeve member 54 comes into contact with the nut member 53. That is, as shown in FIG. 16, the meshing means 55 is brought into a state where the tip portion of the indented tooth 55a of the nut member 53 and the tip portion of the indented tooth 55b of the sleeve member 54 are in contact with each other, as a result of which the rotation of the nut member 53 is temporarily stopped.

At this time, the spindle 15 is urged by the rotation-urging springs 20 via the pin member 19 in a rotation direction that is opposite to the rotation direction in which the nut member 53 is deeply screwed to the spindle 15, as in the first embodiment. Accordingly, as shown in FIG. 16, in a state where the tip portions of the indented tooth 55a and the indented tooth 55b are in contact with each other, the position of the spindle 15 is held in a state where the two ends of the pin member 19 are engaged with the stepped portions 18c of the inner wall of the holding case 18 (see FIG. 9(a)), as in the first embodiment.

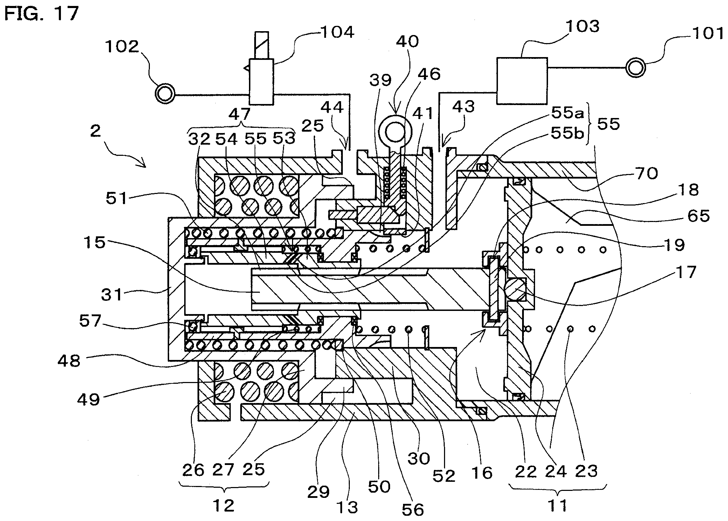

FIG. 17 is a cross-sectional view of the brake cylinder device 2, showing a state where the spring brake means 12 is sufficiently operated. Even if the tip portions of the indented tooth 55a and the indented tooth 55b have come into contact with each other and thus the rotation of the nut member 53 is stopped in the state shown in FIG. 16, the elastic force of the second spring 26 acts on the screw 32 of the spindle 15 via the second piston 27, the cover portion 31, the sleeve member 54, and the nut member 53. At this time, as in the first embodiment, the spindle 15 is held by the elastic force of the rotation-urging springs 20 at a position where the pin member 19 is in contact with the stepped portions 18c (see FIG. 9(a). Accordingly, when the rotational force in the rotation direction that counteracts the elastic force (spring force) of the rotation-urging springs 20 acts on the spindle 15, the spindle 15 is brought into a state where it can rotate in that rotation direction. When the elastic force of the second spring 26 acts on the spindle 15 via the meshing between the nut member 53 and the screw 32 as described above, the spindle 15 rotates in the rotation direction in which the nut member 53 is deeply screwed to the spindle 15 against the spring force of the rotation-urging springs 20 acting on the pin member 19. Thereby, the nut member 53 slightly rotates so as to be deeply screwed to the spindle 15, and the sleeve member 54 slightly moves in the braking direction together with the second piston 27. Then, the position where the indented tooth 55b comes into contact with the indented tooth 55a is slightly displaced from the position where their tip portions have come into contact with each other, and is adjusted to a position where the indented tooth 55a and the indented tooth 55b are meshed more deeply with each other. As with the first embodiment, the spindle 15 becomes rotatable until the two ends of the pin member 19 come into contact with the protruding wall portions 18d of the inner wall of the holding case 18, and the rotatable angle of the spindle 15 is restricted (see FIG. 9(b)).

When the indented tooth 55a and the indented tooth 55b are deeply meshed with each other and the meshing means 55 is thus brought into a sufficiently meshed state as shown in FIG. 17, the nut member 53 can be prevented from rotating since the latch blade 39 of the clutch box 48 and the blade edge 41 of the locking lever 40 are engaged with each other. In other words, the rotation of the clutch box 48 is restricted by the engagement between the blade edge 41 and the latch blade 39, the rotation of the sleeve member 54 is restricted by the engagement between the sliding projection 48a and the sliding groove 54a, and the rotation of the nut member 53 is prevented by the meshing of the meshing means 55.

By the meshing of the meshing means 55 as described above, the clutch mechanism 47 shifts from the disconnecting state to the connecting state. In the connecting state shown in FIG. 17, since the rotation of the nut member 53 is prevented, the second piston 27 urges the spindle 15 via the sleeve member 54 and the nut member 53 in a state where it has moved in the braking direction by the elastic force of the second spring 26, as a result of which the spindle 15, the first piston 24, and the wedges 65 are kept in a state where they have moved in the braking direction. That is, a state where the spring brake means 12 is operated and the spring braking force is acted is maintained.

FIG. 18 is a cross-sectional view of the brake cylinder device 2, showing a state where the compressed air is gradually released from the first pressure chamber 22 from the state shown in FIG. 17 and the air pressure inside the first pressure chamber 22 has been reduced, as a result of which the elastic force acted on the first piston 24 by the action of the first pressure chamber 22 has been reduced. When the reaction force of the spring back from the brake shoe pressing against the wheel tread acts on the wedges 65, the first piston 24, and the spindle 15 in the anti-braking direction in a state where the air pressure in the first pressure chamber 22 has been reduced, the nut member 53 and the clutch box 48 are pressed toward the sleeve member 54 together with the spindle 15. Thereby, as shown in FIG. 18, the indented tooth 55a of the nut member 53 and the indented tooth 55b of the sleeve member 54 are pressed in the direction in which they are deeply meshed with each other, making it possible to prevent disengagement of the meshing means 55.

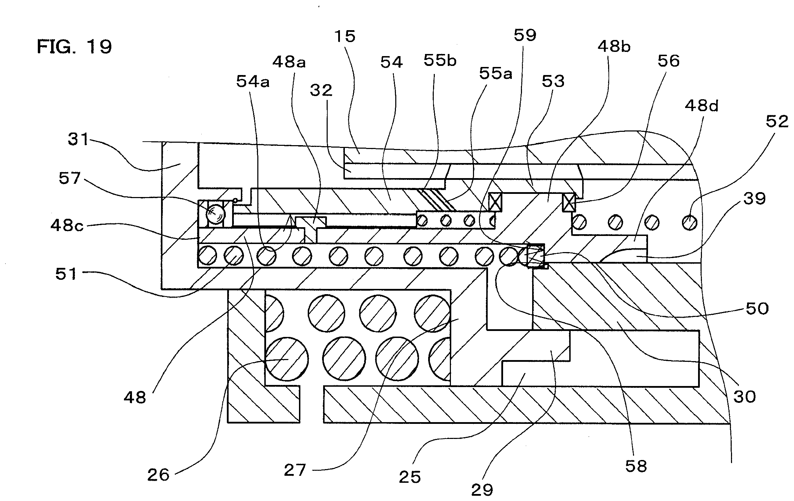

FIG. 19 is an enlarged cross-sectional view, showing in enlargement, a cross section of a portion of the clutch box 48 in FIG. 18 and a portion in the vicinity thereof. In the state shown in FIG. 17, the spring force of the clutch box spring 52 and the spring force of the engaging spring 51 that has a spring force greater than that of the clutch box spring 52 and acting via the engaging member 50 are acted on the clutch box 48 in a state where the engaging member 50 are in contact with both the first engaging portion 58 and the second engaging portion 59. From this state, when the air pressure inside the first pressure chamber 22 is reduced and the reaction force of the spring back from the brake shoe acts on the spindle 15 via the first piston 24 as shown in FIGS. 18 and 19, the nut member 53 is pressed together with the spindle 15 in the direction in which the nut member 53 is deeply meshed with the sleeve member 54. At this time, the clutch box 48 is also pressed in the same direction together with the nut member 53, and the engaging member 50 is disengaged from the first engaging portion 58 and is engaged only with the second engaging portion 59. The clutch box 48 undergoes relative movement toward the cover portion 31 (in the anti-braking direction), and consequently the end 48c of the clutch box 48 in the anti-braking direction comes into contact with the cover portion 31. Thereby, the movement of the clutch box 48 with respect to the second piston 27 is restricted, as a result of which the displacement of the sleeve member 54 with respect to the clutch box 48 is also restricted. Then, it is possible to prevent the sleeve member 54 from being deeply meshed with the nut member 53 more than necessary.

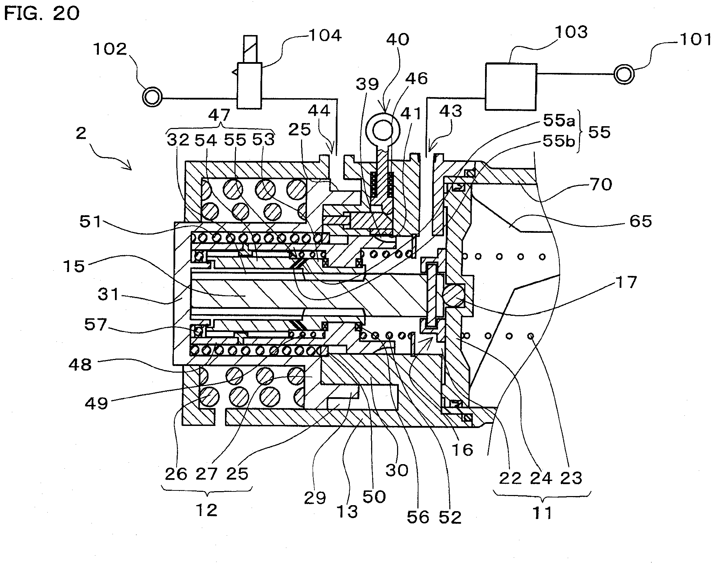

For example, in the case where it is desired that the spring braking force be released, including, for example, where it is desired that the parking position of a railroad vehicle be slightly moved by a tractor without necessitating operation of an air compressor, or where a railroad vehicle is moved by a tractor in a state where power is not supplied to the railroad vehicle, the spring braking force can be manually released by operating the locking lever 40. In this case, when the locking lever 40 is pulled up toward the outside of the cylinder body 13 by manual operation from the state where the spring brake means 12 is in operation as shown in FIG. 18, the blade edge 41 of the locking lever 40 is disengaged from the latch blade 39 of the clutch box 48. Then, the clutch box 48, the sleeve member 54, and the nut member 53 become rotatable while the meshing means 55 between the nut member 53 and the sleeve member 54 kept in the meshed state, and consequently the clutch mechanism 47 and the clutch box 48 as a whole run idle. Thereby, as shown in the cross-sectional view of the brake cylinder device 2 in FIG. 20, both the first piston 24 and the second piston 27 can move with respect to each other up to the stroke end by the elastic force of the first spring 23 and the second spring 26, and consequently the spindle 15, the first piston 24, and the wedges 65 move in the anti-braking direction. In this way, operating the locking lever 40 allows the spring braking force of the spring brake means 12 to be released manually, thereby moving a railroad vehicle or the like.

Note that the portions of the unit brake 110 other than the brake cylinder device 2 are operated in the same manner as the portions of the unit brake 100 of the first embodiment other than the brake cylinder device 1, and therefore the description of the operation is omitted.

As described above, with the unit brake 110, the clutch mechanism 47 establishes the connecting state where the sleeve member 54 and the nut member 53 are meshed with each other and thus the spindle 15 that transmits the elastic force from the spring brake means 12 to the first piston 24 is connected to the second piston 27 when compressed air is discharged from the second pressure chamber 25. On the other hand, in a state where compressed air is supplied to the second pressure chamber 25, the clutch mechanism 47 establishes the disconnecting state where the sleeve member 54 and the nut member 53 are separated from each other and thus the spindle 15 and the second piston 27 are disconnected. Therefore, the clutch mechanism 47 switches the operation of connecting the spring brake means 12 and the service brake means 11 according to the operation of the spring brake means 12, thus switching between transmission and interruption of the elastic force of the spring brake means 12.

With the unit brake 110, the sleeve member 54 that opposes the nut member 53 around the spindle 15 is disposed in the anti-braking direction with respect to the nut member 53, and the sleeve member 54 moves together with the second piston 27 and thus is meshed with the nut member 53 when the clutch mechanism 47 shifts to the connecting state. The nut member 53 that is screwed to and supported rotatably on the spindle 15 is supported so as to be movable in the anti-braking direction. Therefore, when the first piston 24 is pressed in the anti-braking direction by the reaction force of the spring back from the brake shoe as a result of a reduced elastic force acted on the first piston 24 by the action of the first pressure chamber 22 due to a gradual release of the compressed air from the first pressure chamber 22 of the service brake means 11, the nut member 53 is pressed in the direction in which it is deeply meshed with the sleeve member 54. Consequently, it is possible to prevent disengagement of the meshing portions (the meshing means 55) between the nut member 53 and the sleeve member 54 in the clutch mechanism 47 even if the reaction force of the spring back from the brake shoe is acted as a result of a release of the compressed air from the first pressure chamber 22. Accordingly, it is possible to prevent an unintentional release of the braking force of the spring brake means 12 used as a parking brake or the like.

Accordingly, with the unit brake 110, it is possible to prevent an unintentional release of the braking force of the spring brake means 12 due to disengagement of the meshing portions of the clutch mechanism 47, for the unit brake 110 provided with the clutch mechanism 47 that switches between transmission and interruption of the elastic force of the spring brake means 12.

Note that the same effect as described above can be achieved for an embodiment of the brake cylinder device 2 as with an embodiment of the unit brake 110. More specifically, the same effect as described above can be achieved for an embodiment of the brake cylinder device 2 according to the present invention, including: a service brake means 11 including a first piston 24 on which a first pressure chamber 22 and a first spring 23 act in opposite directions, the first piston 24 moving in a braking direction by supply of pressure fluid to the first pressure chamber 22 against an elastic force of the first spring 23; and a spring brake means 12 including a second piston 27 on which a second pressure chamber 25 and a second spring 26 act in opposite directions, the second piston 27 moving in the braking direction by an elastic force of the second spring 26 due to a transition from a state where pressure fluid is supplied to the second pressure chamber 25 to a state where pressure fluid is discharged from the second pressure chamber 25, both the service brake means 11 and the spring brake means 12 being capable of being operated, wherein the brake cylinder device further includes: a spindle 15 that is connected to the first piston 24 so as to be rotatable about an axial direction, that penetrates the second piston 27, and that transmits an elastic force from the spring brake means 12 to the first piston 24; and a second clutch mechanism 47 including a second nut member 53 that is screwed to and supported rotatably on the spindle 15 and that is supported so as to be movable in an anti-braking direction that is an opposite direction to the braking direction, and a sleeve member 54 that is disposed in the anti-braking direction with respect to the second nut member 53 and opposes the second nut member 53 around the spindle 15, wherein the second clutch mechanism 47 establishes a connecting state where the spindle 15 and the second piston 27 are connected by meshing of the sleeve member 54 with the second nut member 53 by movement of the sleeve member 54 together with the second piston 27 with respect to the spindle 15 by an elastic force of the second spring 26, due to a transition from a state where pressure fluid is supplied to the second pressure chamber 25 to a state where pressure fluid is discharged from the second pressure chamber 25, and establishes a disconnecting state where the sleeve member 54 is separated from the second nut member 53 and thus the spindle 15 and the second piston 27 are disconnected in a state where pressure fluid is supplied to the second pressure chamber 25.

With the unit brake 110, the brake cylinder device 2 is provided with the tubular clutch box 48 that supports the sleeve member 54 so as to be slidable within the clutch box 48 and supports the nut member 53 so as to be rotatable within the clutch box 48. Also, the clutch box 48 is held, with respect to the cylinder body 13, so as to be slidable together with the nut member 53 in the anti-braking direction in a state where the spring brake means 12 is operated. Accordingly, even if a large amount of spring back is produced in which the first piston 24 is pressed in the anti-braking direction by the reaction force of the spring back from the brake shoe, the nut member 53 can move in the anti-braking direction together with the clutch box 48 and thus is pressed in the direction in which it is deeply meshed with the sleeve member 54. This makes is possible to maintain the meshed state between the nut member 53 and the sleeve member 54 even if a large amount of spring back is produced from the brake shoe.

Note that the same effect as described above can be achieved for an embodiment of the brake cylinder device 2. More Specifically, the same effect as described above can be achieved for an embodiment of the above-described brake cylinder device 2, wherein the brake cylinder device further includes a clutch box 48 that is formed in a tubular shape, that supports the sleeve member 54 so as to be slidable therewithin along a direction of movement of the second piston 27, and that supports the second nut member 53 so as to be rotatable therewithin, and the clutch box 48 is held, with respect to a cylinder body 13 inside of which the second pressure chamber 25 is partitioned, so as to be slidable together with the second nut member 53 in the anti-braking direction in a state where the spring brake means is operated.

Furthermore, with the unit brake 110, the inner flange portion 48b disposed in the braking direction with respect to the sleeve member 54 is provided on the inner wall of the clutch box 48, and the nut member 53 is supported rotatably with respect to the inner flange portion 48b. Accordingly, a mechanism for rotatably supporting the nut member 53 disposed so as to counteract to be meshed with the sleeve member 54 moving in the braking direction can be realized by a simple configuration by providing the clutch box 48 with the inner flange portion 48b.

Note that the same effect as described above can be achieved for an embodiment of the brake cylinder device 2. More specifically, the same effect as described above can be achieved for an embodiment of the above-described brake cylinder device 2, wherein an inner flange portion 48b projecting inward in a flange shape and disposed in the braking direction with respect to the sleeve member 54 is provided on an inner wall of the clutch box 48, and the second nut member 53 is supported rotatably with respect to the inner flange portion 48b.

With the unit brake 110, between the inner flange portion 48b supporting the nut member 53 and the sleeve member 54, the separating spring 49 is provided that urges one of the inner flange portion 48b and the sleeve member 54 in a direction away from the other of the inner flange portion 48b and the sleeve member 54. Accordingly, a mechanism for separating the sleeve member 54 and the nut member 53 in the disconnecting state of the clutch mechanism 47 can be realized by a simple configuration by disposing the spring 49 between the inner flange portion 48b and the sleeve member 54.

Note that the same effect as described above can be achieved for an embodiment of the brake cylinder device 2. More specifically, the same effect as described above can be achieved for an embodiment of the above-described brake cylinder device 2, wherein the brake cylinder device further includes a separating spring 49 that is disposed between the sleeve member 54 and the inner flange portion 48b and that urges one of the sleeve member 54 and the inner flange portion 48b in a direction away from the other of the sleeve member 54 and the inner flange portion 48b.

With the unit brake 110, the end 48c of the clutch box 48 in the anti-braking direction is provided as a clutch box movement restricting portion that restricts the allowable movement of the clutch box 48 with respect to the second piston 27 by coming into contact with the cover portion 31. Further, the allowable movement is set to be shorter than the allowable relative displacement of the sleeve member 54 with respect to the clutch box 48. Accordingly, when the reaction force resulting from the spring back from the brake shoe acts in the connecting state of the clutch mechanism 47, the movement of the clutch box 48 of the second piston 27 is restricted through contact with the cover portion 31, as a result of which the displacement of the sleeve member 54 with respect to the clutch box 48 is also restricted. This makes it possible to prevent the sleeve member 54 from being meshed deeply with the nut member 53 more than necessary, thus preventing damage in the meshing portions.

Note that the same effect as described above can be achieved for an embodiment of the brake cylinder device 2. More specifically, the same effect as described above can be achieved for an embodiment of the above-described brake cylinder device 2 according to the present invention, wherein an end 48c of the clutch box 48 in the anti-braking direction is provided as a clutch box movement restricting portion that is fixed to the second piston 27 and comes into contact with a cover portion 31 covering an end of the spindle 15 in the anti-braking direction, thereby restricting an allowable relative movement of the clutch box 48 in the anti-braking direction with respect to the second piston 27, and the allowable movement is set to be shorter than an allowable relative displacement by which the sleeve member 54 can be relatively displaced with respect to the clutch box 48.

With the unit brake 110, the first and second engaging portions (58, 59) recessed in a step shape are provided in the cylinder body 13 in the inner wall portion of the sliding holding portion and the outer wall portion of the clutch box 48, respectively, and the engaging member 50 disposed so as to be engageable with these engaging portions (58, 59) is urged by the engaging spring 51 in the engaging direction with respect to the cover portion 31. Also, the clutch box spring 52 that is set so as to have a spring force smaller than that of the engaging spring 51 urges the clutch box 48 in the opposite direction to the engaging spring 51 with respect to the cylinder body 13. Accordingly, a mechanism for holding the clutch box 48 in a movable state with respect to the cylinder body 13 and the second piston 27 can be realized by a simple configuration by providing the first and second engaging portions (58, 59), the engaging member 50, the engaging spring 51, and the clutch box spring 52. Therefore, a mechanism for maintaining the meshed state between the nut member 53 and the sleeve member 54 by moving the nut member 53 together with the clutch box 48 as a whole even if a large amount of spring back from the brake shoe is produced can be realized by a simple configuration. Note that since the engaging spring 51 is set to have a spring force greater than that of the clutch box spring 52, the nut member 53 and the sleeve member 54 are kept separated when the clutch mechanism 47 is in the disconnecting state.

Note that the same effect as described above can be achieved for an embodiment of the brake cylinder device 2. More specifically, the same effect as described above can be achieved for an embodiment of the above-described brake cylinder device 2 according to the present invention, further including: a first engaging portion 58 that is provided in the cylinder body 13 in an inner wall portion of a sliding holding portion slidably holding the clutch box 48 and that is formed so as to oppose the second piston 27 and to be recessed in a step shape; a second engaging portion 59 that is provided in an outer wall portion of the clutch box 48 and that is formed so as to oppose the second piston 27 and to be recessed in a step shape; an engaging member 50 disposed so as to be engageable with the first engaging portion 58 and the second engaging portion 59; an engaging spring 51 that is disposed between the engaging member 50 and a cover portion 31 fixed to the second piston 27 and covering an end of the spindle 15 in the anti-braking direction, and that urges the engaging member 50 in a direction in which the engaging member 50 is engaged with the first engaging portion 58 and the second engaging portion 59; and a clutch box spring 52 that urges the clutch box 48 with respect to the cylinder body 13 in a direction opposite to the engaging spring 51, wherein the engaging spring 51 is set so as to have a spring force greater than that of the clutch box spring 52.

With the unit brake 110, the clutch box 48 that supports the sleeve member 54 so as to be slidable only in the axial direction of the spindle 15 is held with respect to the cylinder body 13, and the extension 48d extended so as to project further in the braking direction than the nut member 53 is provided at the end of the clutch box 48 in the braking direction. Then, the rotation of the clutch box 48 with respect to the cylinder body 13 is restricted since the other end of the locking lever 40 is engaged with the extension 48d. Accordingly, in the connecting state of the clutch mechanism 47, the rotations of the sleeve member 54 meshed with the nut member 53 and the clutch box 48 are restricted, thus maintaining the spring braking force of the spring brake means 12. On the other hand, when it is necessary to manually release the spring braking force of the spring brake means 12, an operation of pulling one end of the locking lever 40 is performed. Consequently, the locking lever 40 and the extension 48d are disengaged, thus releasing the spring braking force of the spring brake means 12. In general, in a vehicle unit brake, a lever for releasing the spring braking force of the spring brake means is provided at a position projecting from the side of the cylinder body of the brake cylinder device. In contrast, with the unit brake 110, the locking lever 40 is provided at a position where it is engaged with the extension 48d of the clutch box 48 that projects further in the braking direction than the nut member 53 screwed to the spindle 15. Therefore, as with a commonly used unit brake, the locking lever 40 can be provided as a position projecting from the side of the cylinder body 13 of the brake cylinder device 2. Accordingly, even when the unit brake 110 is installed on an existing vehicle, it is possible to maintain the same operability for the operation for releasing the spring braking force.

Note that the same effect as described above can be achieved for an embodiment of the brake cylinder device 2. More specifically, the same effect as described above can be achieved for an embodiment of the above-described brake cylinder device 2, further including a locking lever 40 that can release a spring braking force of the spring brake means 12 by an operation of pulling one end thereof that is disposed projecting from the cylinder body 13, wherein the sleeve member 54 is supported with respect to the clutch box 48 so as to be slidable parallel to an axial direction of the spindle 15 in a state where a rotational displacement of the spindle 15 about the axial direction is restricted, the clutch box 48 is held with respect to the cylinder body 13 so as to be rotatable about the axial direction of the spindle 15, and an extension 48d extended so as to project further in the braking direction than the second nut member 53 is provided at an end of the clutch box 48 in the braking direction, and a rotational displacement of the clutch box 48 with respect to the cylinder body 13 is restricted by engagement of another end of the locking lever 40 with the clutch box 48 at the extension 48d, and the locking lever 40 and the extension 48d are disengaged by an operation of pulling the one end of the locking lever 40.

With the unit brake 110, the space area 60 in which the end of the clutch box 48 in the braking direction can further project and move in the braking direction is formed inside the cylinder body 13. Accordingly, it is possible to prevent the amount of the moving stroke of the second piston 27 in the braking direction from being restricted by contact of the clutch box 48 with the cylinder body 13. This makes it possible to reliably transmit the spring braking force of the spring brake means 12 regardless of the amount of the moving stroke of the second piston 27.

Note that the same effect as described above can be achieved for an embodiment of the brake cylinder device 2. More specifically, the same effect as described above can be achieved for an embodiment of the above-described brake cylinder device 2, wherein, inside the cylinder body 13, a space area 60 is formed in a location further advanced in the braking direction than the end of the clutch box 48 in the braking direction, and the clutch box 48 is held slidably with respect to the cylinder body 13 so as to be able to project and move in the space area 60 in the braking direction.

With the unit brake 110, the spindle 15 is connected rotatably to the first piston 24, and the spindle holding means 16 is provided that restricts the rotatable angle of the spindle 15 with respect to the first piston 24 and that holds the spindle 15 in a state where the spindle 15 is urged in the rotation direction that is opposite to the rotation direction of the spindle 15 in which the nut member 53 is deeply screwed to the spindle 15. Therefore, when the sleeve member 54 that has moved together with the second piston 27 with respect to the spindle 15 comes into contact with the second nut member 53 at the tip portions while the clutch mechanism 47 is shifting to the connecting state, the spindle 15 is held by the spindle holding means 16 so as to be rotatable within a predetermined angle range in the rotation direction in which the nut member 53 is deeply screwed to the spindle 15. Then, when the elastic force of the second spring 26 further acts on the second piston 27 in a state where the tip portion of the sleeve member 54 is in contact with the nut member 53, this elastic force acting via the sleeve member 54 and the nut member 53 causes the spindle 15 to further rotate within the predetermined angle range in the rotation direction in which the nut member 53 is more deeply screwed to the spindle 15. Thereby, the nut member 53 slightly rotates and the sleeve member 54 moves together with the second piston 27 with respect to the spindle 15 such that the teeth of the sleeve member 54 and the nut member 53 are more deeply meshed with each other, thus reliably connecting the spindle 15 and the second piston 27. As a result, a state where the braking force of the spring brake means 12 is sufficiently transmitted is maintained. Then, it is possible to further prevent disengagement of the meshing portions (the meshing means 55) of the clutch mechanism 47 even if the first piston 24 is pressed by the reaction force from the brake shoe or the like in the direction opposite to the braking direction as a result of a reduced elastic force acted on the first piston 24 by the action of the first pressure chamber 22 due to a gradual release of the compressed air from the first pressure chamber 22 of the service brake means 11.

Note that the same effect as described above can be achieved for an embodiment of the brake cylinder device 2. More specifically, the same effect as described above can be achieved for an embodiment of the above-described brake cylinder device 2, further including a second spindle holding means 16 that restricts a rotatable angle of the spindle 15 with respect to the first piston 24, and that holds the spindle 15 with respect to the first piston 24 in a state where the spindle 15 is urged in a rotation direction that is opposite to a rotation direction of the spindle 15 in which the second nut member 53 is deeply screwed to the spindle 15.

Although embodiments of the present invention have been described thus far, the present invention is not limited to the above-described embodiments, and various modifications may be made within the scope recited in the claims. For example, the following modifications are possible.

Although the first and second embodiments have been described taking, as an example, a configuration in which the spring brake means is operated after operating the service brake means, the present invention is not limited thereto. It is also possible to adopt a configuration in which only the spring brake means is operated during parking, without operating the service brake means. In this case, the stroke of the spring brake means may be set such that the brake shoe comes into contact with the wheel.

Furthermore, although the first and second embodiments have been described taking, as an example, a case in which compressed air is used as pressure fluid for operating the brake cylinder device, the present invention is not limited thereto. The brake cylinder device may be operated by another pressure fluid (for example, pressure oil).

Although the first and second embodiments have been described taking, as an example, a spindle holding means including a holding case, a pin member, and a rotation-urging spring, this need not be the case. It is possible to use a spindle holding means having a different configuration. That is, any spindle holding means may be used as long as it is configured to restrict the rotatable angle of the spindle with respect to the first piston and to hold the spindle with respect to the first piston in a state where the spindle is urged in a rotation direction that is opposite to a rotation direction of the spindle in which the nut member is deeply screwed to the spindle.

Although the first and second embodiments have been described taking, as an example, a unit brake in which the brake cylinder device is disposed such that the direction of movement of the first piston and the axle shaft of wheel are parallel, this need not be the case. The brake cylinder device may be disposed in a state where the direction of movement of the first piston and the axle shaft of the wheel are not parallel.

The shape and the position of the clutch box are not limited to those illustrated in the second embodiment, and various modifications may be made. Further, the shape and the position of the first engaging portion, the second engaging portion, the engaging member, the engaging spring, and the clutch box spring as well are not limited to those illustrated in the second embodiment, and various modifications may be made.

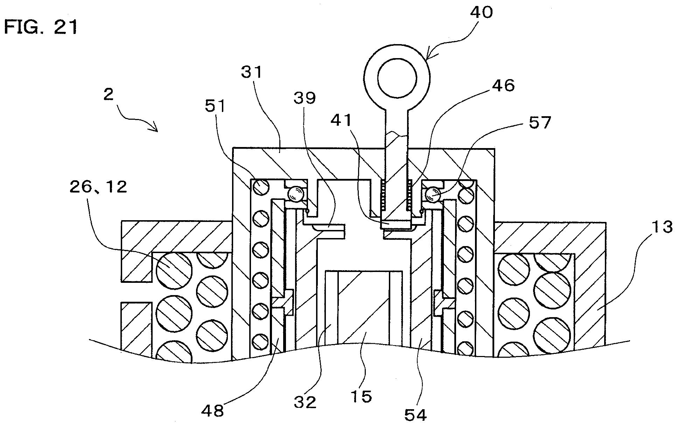

Various modifications may be made to the position where the locking lever is attached in the brake cylinder device. FIG. 21 is a partial enlarged cross-sectional view showing a modification in which the attachment position of the locking lever 40 is modified in the brake cylinder device 2 of the second embodiment, showing the end of the cover portion 31 in the anti-braking direction and a portion in the vicinity. As shown in the modification in FIG. 21, it is possible to adopt a configuration in which one end of the locking lever 40 is disposed so as to project from the end of the cover portion 31 in the anti-braking direction and the locking lever 40 can release the spring braking force of the spring brake means 12 by an operation of pulling one end of the locking lever 40. In this modification, as illustrated in FIG. 21, the latch blade 39 that is disposed across the circumferential direction about the axial direction of the spindle 15 and is formed radially along the radial direction is formed at the end of the sleeve member 54 in the anti-braking direction. Also, the blade edge 41 that is urged toward the latch blade 39 by the spring 46 is provided at the tip of the other end of the locking lever 40. As with the second embodiment, the latch blade 39 and the blade edge 41 serve as a one-way clutch that prevent the rotation causing the spindle 15 to move in the anti-braking direction but allows the rotation causing the spindle 15 to move in the braking direction, for the nut member 53 meshed with the sleeve member 54 whose rotational displacement with respect to the clutch box 48 is restricted. In this way, modifications may be made for the attachment position of the locking lever 40.

### Industrial Applicability

The present invention can be widely applied to a unit brake that includes a brake cylinder device in which both a service brake means and a spring brake means used, for example, as a parking brake, are capable of being operated, and a unit brake that includes the brake cylinder device for braking the rotation of a wheel of a vehicle.

### Description of Reference Numerals

- 1: brake cylinder device
- 11: service brake means
- 12: spring brake means
- 14: clutch mechanism
- 15: spindle
- 16: spindle holding means
- 22: first pressure chamber
- 23: first spring
- 24: first piston
- 25: second pressure chamber
- 26: second spring
- 27: second piston
- 53: nut member
- 100: unit brake

## Claims

1. A brake cylinder device (1) comprising:
a service brake means (11) including a first piston (24) on which a first pressure chamber (22) and a first spring (23) act in opposite directions, the first piston (24) moving in a braking direction by supply of pressure fluid to the first pressure chamber (22) against an elastic force of the first spring (23); and
a spring brake means (12) including a second piston (27) on which a second pressure chamber (25) and a second spring (26) act in opposite directions, the second piston (27) moving in the braking direction by an elastic force of the second spring (26) due to a transition from a state where pressure fluid is supplied to the second pressure chamber (25) to a state where pressure fluid is discharged from the second pressure chamber (25),
both the service brake means (11) and the spring brake means (12) being capable of being operated,
wherein the brake cylinder device (1) further comprises:
a spindle (15) that is connected to the first piston (24) so as to be rotatable about an axial direction, that penetrates the second piston (27), and that transmits an elastic force from the spring brake means (12) to the first piston (24);
a first clutch mechanism (14) that includes a first nut member (33) supported rotatably with respect to the second piston (27) and screwed to the spindle (15), that establishes a connecting state where the spindle (15) and the second piston (27) are connected by movement of the first nut member together with the second piston (27) with respect to the spindle (15) by an elastic force of the second spring (26), due to a transition from a state where pressure fluid is supplied to the second pressure chamber (25) to a state where pressure fluid is discharged from the second pressure chamber (25), and that establishes a disconnecting state where the spindle (15) and the second piston (27) are disconnected in a state where pressure fluid is supplied to the second pressure chamber (25); and
a first spindle holding means (16) that restricts a rotatable angle of the spindle (15) with respect to the first piston (24) and that holds the spindle (15) with respect to the first piston (24) in a state where the spindle (15) is urged in a rotation direction that is opposite to a rotation direction of the spindle (15) in which the first nut member is deeply screwed to the spindle.

2. The brake cylinder device (1) according to claim 1,
wherein the first spindle holding means (16) comprises:
a holding case (18) that is fixed to the first piston (24) and that holds an end of the spindle (15) such that the end is accommodated therein;
a restricting portion (19) that is provided in the spindle (15) and that restricts a rotatable angle of the spindle (15) by engaging the holding case (18); and
a rotation-urging spring (20) that urges the end of the spindle (15) in the opposite rotation direction with respect to the holding case (18) inside the holding case.

3. The brake cylinder device (1) according to claim 2,
wherein the restricting portion (19) is provided as a pin member that is attached to the spindle (15) so as to penetrate the end of the spindle (15) and ends of the restricting portion (19) projecting from the spindle come into abutting engagement with an inner wall of the holding case (18), and
a plurality of the rotation-urging springs (20) are provided, and the rotation-urging springs urge the end of the spindle in the opposite rotation direction with respect to the holding case via the pin member.

4. The brake cylinder device (1) according to any one of claims 1 to 3,
wherein a ball member (17) that is disposed so as to be accommodated in a recess formed in at least one of the spindle (15) and the first piston (24) is provided between the end of the spindle (15) and the first piston (24).

5. A unit brake (100) comprising: the brake cylinder device (1) according to any one of claims 1 to 4; and a brake body (70) to which the brake cylinder device (1) is attached,
wherein the unit brake (100) operates at least one of the service brake means and the spring brake means to bring into contact with a wheel of a vehicle a brake shoe that is held movable relative to the brake body, thereby braking rotation of the wheel.

## Patentansprüche

1. Bremszylindervorrichtung (1), umfassend:
ein Betriebsbremsmittel (11), das einen ersten Kolben (24) aufweist, auf dem eine erste Druckkammer (22) und eine erste Feder (23) in entgegengesetzte Richtungen wirken, wobei sich der erste Kolben (24) in einer Bremsrichtung durch Zufuhr von Druckfluid in die erste Druckkammer (22) entgegen einer Federkraft der ersten Feder (23) bewegt; und
ein Federbremsmittel (12), das einen zweiten Kolben (27) aufweist, auf dem eine zweite Druckkammer (25) und eine zweite Feder (26) in entgegengesetzte Richtungen wirken, wobei sich der zweite Kolben (27) in die Bremsrichtung durch eine Federkraft der zweiten Feder (26) aufgrund eines Übergangs von einem Zustand, in dem Druckfluid in die zweite Druckkammer (25) zugeführt wird, in einen Zustand, in dem Druckfluid aus der zweiten Druckkammer (25) ausgelassen wird, bewegt,
wobei sowohl das Betriebsbremsmittel (11) als auch das Federbremsmittel (12) betätigt werden können,
wobei die Bremszylindervorrichtung (1) ferner umfasst:
eine Spindel (15), die mit dem ersten Kolben (24) verbunden ist, um um eine axiale Richtung drehbar zu sein, und die in den zweiten Kolben (27) dringt und die eine Federkraft von dem Federbremsmittel (12) auf den ersten Kolben (24) überträgt;
einen ersten Kupplungsmechanismus (14), der ein erstes Mutterelement (33) aufweist, das in Bezug auf den zweiten Kolben (27) drehbar getragen und an die Spindel (15) geschraubt ist, der einen Verbindungszustand errichtet, in dem die Spindel (15) und der zweite Kolben (27) durch Bewegung des ersten Mutterelements zusammen mit dem zweiten Kolben (27) in Bezug auf die Spindel (15) durch eine Federkraft der zweiten Feder (26), aufgrund eines Übergangs von einem Zustand, in dem Druckfluid in die zweite Druckkammer (25) zugeführt wird, in einen Zustand, in dem Druckfluid aus der zweiten Druckkammer (25) ausgelassen wird, verbunden sind, und der einen Trennungszustand errichtet, in dem die Spindel (15) und der zweite Kolben (27) in einem Zustand getrennt sind, in dem Druckfluid in die zweite Druckkammer (25) zugeführt wird; und
ein erstes Spindelhaltemittel (16), das einen Drehwinkel der Spindel (15) in Bezug auf den ersten Kolben (24) begrenzt und das die Spindel (15) in Bezug auf den ersten Kolben (24) in einem Zustand hält, in dem die Spindel (15) in eine Drehrichtung gedrängt wird, die einer Drehrichtung der Spindel (15) entgegengesetzt ist, wobei das erste Mutterelement tief an die Spindel geschraubt wird.

2. Bremszylindervorrichtung (1) nach Anspruch 1,
wobei das erste Spindelhaltemittel (16) Folgendes umfasst:
ein Haltegehäuse (18), das an dem ersten Kolben (24) befestigt ist und das ein Ende der Spindel (15) derart hält, dass das Ende darin aufgenommen ist;
einen Begrenzungsabschnitt (19), der in der Spindel (15) vorgesehen ist und der einen Drehwinkel der Spindel (15) durch Eingreifen mit dem Haltegehäuse (18) begrenzt; und
eine Drehdrängungsfeder (20), die das Ende der Spindel (15) in die entgegengesetzte Drehrichtung in Bezug auf das Haltegehäuse (18) im Inneren des Haltegehäuses drängt.

3. Bremszylindervorrichtung (1) nach Anspruch 2,
wobei der Begrenzungsabschnitt (19) als Stiftelement vorgesehen ist, das an der Spindel (15) angebracht ist, um in das Ende der Spindel (15) zu dringen, und Enden des Begrenzungsabschnitts (19), die von der Spindel vorstehen, in Anlageeingriff mit einer inneren Wand des Haltegehäuses (18) kommen, und
wobei mehrere Drehdrängungsfedern (20) vorgesehen sind und die Drehdrängungsfedern das Ende der Spindel in die entgegengesetzte Drehrichtung in Bezug auf das Haltegehäuse über das Stiftelement drängen.

4. Bremszylindervorrichtung (1) nach einem der Ansprüche 1 bis 3,
wobei ein Kugelelement (17), das angeordnet ist, um in einer Vertiefung, die in mindestens einer/m von der Spindel (15) und dem ersten Kolben (24) gebildet ist, aufgenommen zu sein, zwischen dem Ende der Spindel (15) und dem ersten Kolben (24) vorgesehen ist.

5. Einheitsbremse (100), umfassend: die Bremszylindervorrichtung (1) nach einem der Ansprüche 1 bis 4; und einen Bremskörper (70), an dem die Bremszylindervorrichtung (1) angebracht ist,
wobei die Einheitsbremse (100) mindestens eines von dem Betriebsbremsmittel und dem Federbremsmittel betätigt, um einen Bremsschuh, der relativ zu dem Bremskörper bewegbar gehalten ist, mit einem Rad eines Fahrzeugs in Kontakt zu bringen, wodurch eine Drehung des Rads gebremst wird.

## Revendications

1. Dispositif de cylindre de frein (1) comprenant :
un moyen de frein de service (11) comportant un premier piston (24) sur lequel une première chambre de pression (22) et un premier ressort (23) agissent dans des directions opposées, le premier piston (24) se déplaçant dans une direction de freinage par un apport de fluide de pression à la première chambre de pression (22) contre une force élastique du premier ressort (23) ; et
un moyen de frein à ressort (12) comportant un second piston (27) sur lequel une seconde chambre de pression (25) et un second ressort (26) agissent dans des directions opposées, le second piston (27) se déplaçant dans la direction de freinage par une force élastique du second ressort (26) due à une transition d'un état où un fluide de pression est apporté à la seconde chambre de pression (25) à un état où un fluide de pression est évacué de la seconde chambre de pression (25),
le moyen de frein de service (11) et le moyen de frein à ressort (12) étant tous deux capables d'être actionnés,
dans lequel le dispositif de cylindre de frein (1) comprend en outre :
une fusée (15) qui est raccordée au premier piston (24) de façon à pouvoir tourner autour d'une direction axiale, qui pénètre dans le second piston (27), et qui transmet une force élastique du moyen de frein à ressort (12) au premier piston (24) ;
un premier mécanisme d'embrayage (14) qui comporte un premier organe écrou (33) supporté en rotation vis-à-vis du second piston (27) et vissé à la fusée (15), qui établit un état de raccordement où la fusée (15) et le second piston (27) sont raccordés par un déplacement du premier organe écrou conjointement au second piston (127) vis-à-vis de la fusée (15) par une force élastique du second ressort (26), due à une transition d'un état où un fluide de pression est apporté à la seconde chambre de pression (25) à un état où un fluide de pression est évacué de la seconde chambre de pression (25), et qui établit un état de désengagement où la fusée (15) et le second piston (27) sont désengagés dans un état où un fluide de pression est apporté à la seconde chambre de pression (25) ; et
un premier moyen de maintien de fusée (16) qui limite un angle de rotation de la fusée (15) vis-à-vis du premier piston (24) et qui maintient la fusée (15) vis-à-vis du premier piston (24) dans un état où la fusée (15) est poussée dans une direction de rotation qui est opposée à une direction de rotation de la fusée (15) dans laquelle le premier organe écrou est vissé profondément sur la fusée.

2. Dispositif de cylindre de frein (1) selon la revendication 1,
dans lequel le premier moyen de maintien de fusée (16) comprend :
un carter de maintien (18) qui est fixé au premier piston (24) et qui maintient une extrémité de la fusée (15) de sorte que l'extrémité soit logée dans celui-ci ;
une portion de limitation (19) qui est prévue dans la fusée (15) et qui limite un angle de rotation de la fusée (15) en mettant en prise le carter de maintien (18) ; et
un ressort de poussée en rotation (20) qui pousse l'extrémité de la fusée (15) dans la direction de rotation opposée vis-à-vis du carter de maintien (18) à l'intérieur du carter de maintien.

3. Dispositif de cylindre de frein (1) selon la revendication 2,
dans lequel la portion de limitation (19) est prévue sous la forme d'un organe broche qui est attaché à la fusée (15) de façon à pénétrer l'extrémité de la fusée (15) et les extrémités de la portion de limitation (19) en saillie depuis la fusée viennent en prise par butée avec une paroi interne du carter de maintien (18), et
une pluralité de ressorts de poussée en rotation (20) sont prévus, et les ressorts de poussée en rotation poussent l'extrémité de la fusée dans la direction de rotation opposée vis-à-vis du carter de maintien par le biais de l'organe broche.

4. Dispositif de cylindre de frein (1) selon l'une quelconque des revendications 1 à 3,
dans lequel un organe bille (17) qui est disposé de façon à être logé dans un évidement formé dans au moins l'un de la fusée (15) et du premier piston (24) est prévu entre l'extrémité de la fusée (15) et le premier piston (24).

5. Frein unitaire (100) comprenant : le dispositif de cylindre de frein (1) selon l'une quelconque des revendications 1 à 4 ; et un corps de frein (70) auquel est attaché le dispositif de cylindre de frein (1),
dans lequel le frein unitaire (100) actionne au moins l'un du moyen de frein de service et du moyen de frein à ressort pour mettre en contact avec une roue d'un véhicule un patin de frein qui est maintenu mobile par rapport au corps de frein, freinant ainsi la rotation de la roue.
